# FASCICULE DE BREVET EUROPEEN

(11) **EP 4 277 778 B1**
(45) Date de publication et mention de la délivrance du brevet: **14.10.2026**
(21) Numéro de dépôt: 22705072.1
(22) Date de dépôt: 10.01.2022
(51) Int. Cl.: B29C 70/44, B29C 33/30, B29C 43/12, B29C 51/10, B29B 11/16, B29C 43/36, B29C 53/04, B29C 70/54

(54) **PROCEDES ET DISPOSITIFS DE FORMAGE DE MATERIAUX COMPOSITES**
VERFAHREN UND VORRICHTUNGEN ZUM FORMEN VON VERBUNDWERKSTOFFEN
METHODS AND DEVICES FOR MOULDING COMPOSITE MATERIALS

(30) Priorité: 14.01.2021 FR 2100363
(43) Date de publication de la demande: 22.11.2023
(73) Titulaire: Hexcel Reinforcements, 01120 Dagneux (FR)
(72) Inventeur: PERRILLAT-COLLOMB, Pascal, 38510 SAINT-VICTOR-DE-MORESTEL (FR); DUCARRE, Jacques, 38630 CORBELIN (FR); ZIMMER, Thomas, 73000 CHAMBERY (FR); POURTIER, Jean, 73370 LE BOURGET DU LAC (FR)
(74) Mandataire: Atout PI Laplace
(86) Numéro de dépôt international: PCT/FR2022/050050
(87) Numéro de publication internationale: WO 2022/152999

(56) Documents cités:
- US-A- 5 464 337
- US-A1- 2006 068 170
- US-A1- 2007 278 718

## Description

### Domaine Technique

La présente invention concerne le domaine des procédés de formage de matériaux composites et les dispositifs adaptés à de tels procédés.

### Technique antérieure

Les matériaux composites sont formés d'un ensemble de fibres de renfort, notamment de carbone ou d'aramide, associé à une matière polymérique qui assure au moins partiellement la liaison des fibres de renfort entre elles. Les matériaux composites sont souvent destinés à la réalisation de pièces composites de forme plus ou moins complexe, notamment pour le domaine de l'aéronautique, de l'automobile, du sport ou de l'énergie. La fabrication de pièces ou d'articles composites peut être réalisée par deux types de procédés : les procédés dits "indirects" et les procédés dits "directs" ou "LCM" (de l'anglais « Liquid Composite Moulding »).

Un procédé indirect met en œuvre des matériaux composites dits préimprégnés d'une résine polymérique qui sont mis en forme pour conduire à la pièce composite souhaitée, grâce à une opération de mise en forme en compression. Les matériaux fibreux préimprégnés comprennent la quantité de résine souhaitée pour la pièce composite finale.

Un procédé direct est défini par le fait qu'un ou plusieurs renforts fibreux sont mis en œuvre à l'état "sec" (c'est-à-dire sans la matrice finale), la résine devant servir de matrice, étant mise en œuvre séparément, par exemple, par injection dans le moule contenant les renforts fibreux (procédé "RTM", de l'anglais « Resin Transfer Moulding »), par infusion au travers de l'épaisseur des renforts fibreux (procédé "LRI", de l'anglais « Liquid Resin Infusion » ou procédé "RFI", de l'anglais « Resin Film Infusion »), ou bien encore par enduction/imprégnation manuelle au rouleau ou au pinceau, sur chacune des couches unitaires de renforts fibreux, appliquée de manière successive sur la forme. US5464337A divulgue un procédé de ce genre.

Pour les procédés RTM, LRI ou RFI, il faut en général tout d'abord fabriquer une préforme de la forme de l'article fini désiré, puis imprégner cette préforme, le plus souvent formée d'un empilement de plis, d'une résine destinée à constituer la matrice. La résine est injectée ou infusée par différentiel de pressions en température, puis une fois que toute la quantité de résine nécessaire est contenue dans la préforme, l'ensemble est porté à une température plus élevée pour réaliser le cycle de polymérisation/réticulation et ainsi entraîner son durcissement.

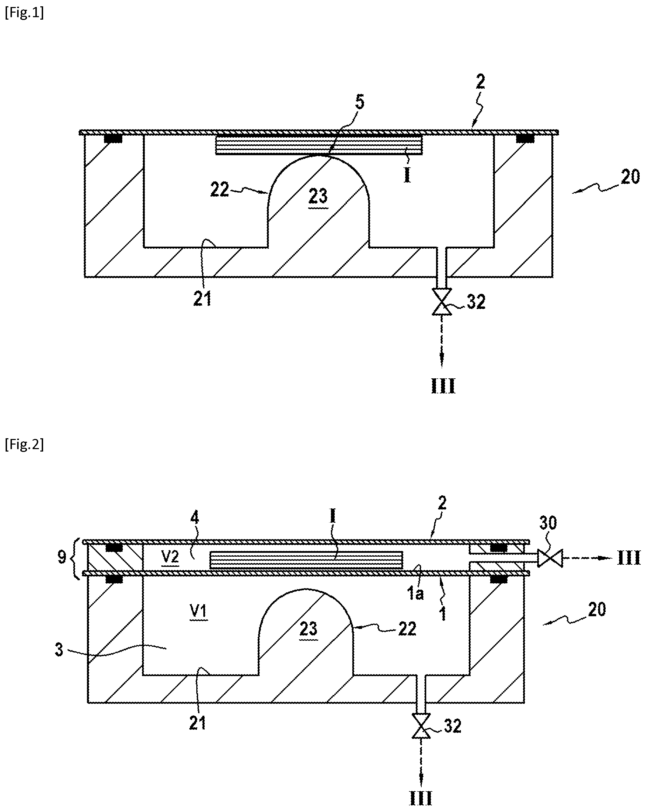

Les matériaux composites de départ, qu'ils soient secs ou préimprégnés, présentent une surface plane et sont proposés sous la forme de structures planes, nommée également plaques, qui doivent être mises en forme selon la forme souhaitée pour la pièce composite finale. Bien souvent, le matériau composite mis en forme est constitué d'un empilement de plusieurs plis de matériaux préalablement associés entre eux pour former une plaque unitaire, qui, de ce fait, peut également être appelé préforme. Les procédés de formage dans l'art antérieur sont principalement de deux types :
- les procédés qui utilisent un moule ouvert présentant une surface de formage non plane en son fond, en combinaison avec une membrane venant fermer le moule, comme cela est présenté sur la **figure** 1, qui seront nommés procédés simple membrane, et
- les procédés qui utilisent un moule ouvert en combinaison avec deux membranes entre lesquelles le matériau composite à mettre en forme est placé, comme cela est présenté sur la **figure 2****,** qui seront nommés procédés double membrane.

Les procédés simple membrane sont adaptés au formage de pièces convexes à simple courbure. Ces procédés autorisent de nombreuses possibilités de déformation, notamment en flexion et des glissements inter-plis. Mais, un de leurs inconvénients majeur est lié au déséquilibre du matériau composite plan à préformer qui est simplement posé sur la forme convexe destinée à lui donner sa forme, lors de la première étape du procédé, comme cela est illustré en **figure 1****.** Par ailleurs, l'accostage de la membrane sur ce matériau composite peut également avoir un impact sur son positionnement sur le fond en forme du moule. Ainsi, le positionnement du matériau de départ et, de ce fait, sa déformation sont non-contrôlés, ce qui réduit les performances mécaniques de la préforme obtenue. De plus, dans un tel procédé, il y a une non maitrise de la matière restant à former durant la mise en forme, et des difficultés à obtenir des formes avec une double courbure. Enfin, dans le procédé simple membrane, il n'y a pas de paramètres réglables au cours du procédé qui pourraient être une source potentielle d'optimisation du procédé, pour un matériau composite de départ et une géométrie donnés.

Pour pallier aux problèmes de positionnement, des procédés dits double membrane ont été développés. De tels procédés de formage sous pression réduite, avec utilisation de deux membranes, ont pour intérêt d'assurer le maintien et le positionnement précis du matériau composite durant tout son procédé de mise en forme. Ils offrent aussi des possibilités de former le matériau composite, selon des géométries à double courbure, grâce à des déformations en cisaillement plan sous contraintes transverses.

Pour cela, le matériau composite est placé entre deux membranes et une pression réduite est créée entre les deux membranes pour assurer un bon maintien de ce dernier avant la mise en forme. Les procédés double membrane offrent :
- un contrôle de la position des plis, étant donné qu'une fois le matériau plan positionné sur une membrane inférieure **1** comme illustré en **figure 2****,** ce dernier n'est pas soumis à un déplacement gravitaire, comme dans le cas du procédé simple membrane,
- une meilleure aptitude à l'automatisation,
- une possibilité de moduler le procédé, en jouant sur la pression appliquée entre les deux membranes, comme proposé dans le brevet US 9,259,859,
- des possibilités d'utilisation pour le formage de matériaux selon des géométries plus complexes que dans le cas du procédé à simple membrane, notamment dans le cas de configuration asymétrique. En effet, les déformations en flexion sont toujours prépondérantes, mais les modes de déformation s'étendent aux glissements intra et inter-plis, ainsi qu'aux cisaillements plans, ce qui permet l'obtention de forme à double courbure.

Cependant, il a été constaté que des contraintes transverses limitaient les glissements inter-plis, ce qui pourrait induire des défauts (plissures par exemple) sur les matériaux en forme obtenus, même dans le cas de simple courbure. En effet, l'application d'une pression proche du vide entre les deux membranes augmente le compactage du matériau composite et réduit la capacité de glissement des fibres et, lorsque le matériau composite se présente sous la forme d'un empilement de plusieurs plis, la capacité de glissement entre les plis, ce qui entraine l'apparition de plissures lors de la mise en forme. Pour réduire ce phénomène, le brevet US 9,259,859 a proposé de jouer sur la pression appliquée dans l'espace inter-membranaire durant la première phase du procédé, en la maintenant à une valeur plus élevée (500 mbar dans les exemples), avant de la réduire à une valeur en dessous de 10 mbar lors de l'opération de formage final et de compactage. Cependant, une telle modulation ne permet pas de supprimer totalement les défauts, bien qu'une réduction puisse être constatée. Des défauts persistent en fonction des matériaux, de leur épaisseur et des géométries souhaitées.

Dans ce contexte, l'invention propose des nouveaux procédés et dispositifs de formage qui permettent de solutionner les problèmes rencontrés dans l'art antérieur. Les inventeurs ont élaboré des procédés et dispositifs qui offrent une plus grande modularité et permettent ainsi de bénéficier des avantages des deux procédés simple et double membrane, en palliant, cependant, à leurs inconvénients.

### Exposé de l'invention

La présente invention concerne un procédé pour préformer un matériau composite se présentant sous la forme d'une plaque comprenant des fibres de renfort liées entre elles, notamment par une matière polymérique plastique, dans lequel le matériau composite à préformer est placé au sein d'un dispositif de formage, comprenant une première chambre étanche formée entre un moule comportant une surface de formage et une membrane inférieure, ladite première chambre définissant un premier volume **V1** modulable et une seconde chambre étanche formée entre la première membrane et une deuxième membrane placée au-dessus de la première membrane, ladite seconde chambre définissant un second volume **V2** modulable, nommé volume inter-membranaire, le matériau composite étant logé dans ce volume inter-membranaire **V2.** Le procédé selon l'invention comprend une phase de formage intermédiaire **(b)** lors de laquelle du gaz est introduit dans la seconde chambre, et ainsi la membrane supérieure est maintenue localement à distance de la membrane inférieure, tout en maintenant la pression **P2** de la seconde chambre en dessous de la pression extérieure **Pext** au dispositif de formage, et en particulier de la pression atmosphérique, lorsque la pression extérieure **Pext** est égale à la pression atmosphérique, et, plaçant en butée la membrane inférieure sur la surface de formage.

L'invention a pour objet un procédé pour préformer un matériau composite se présentant sous la forme d'une plaque, ledit matériau composite comprenant des fibres de renfort liées entre elles, notamment par une matière polymérique plastique, ledit procédé comprenant les phases successives suivantes :
**(a)** Une phase d'agencement du matériau composite au sein d'un dispositif de formage comprenant les opérations suivantes :
   **(a1)** disposer d'un moule dont le fond non plan définit une surface de formage correspondant à la forme à donner au matériau composite à préformer,
   **(a2)** disposer, au-dessus du fond du moule, une première membrane, nommée membrane inférieure, sur laquelle est déposé le matériau composite à préformer, et une seconde membrane s'étendant au-dessus du matériau composite, nommée membrane supérieure, lesdites deux membranes pouvant subir des déformations élastiques et étant imperméables aux gaz, et ledit matériau composite étant placé au-dessus de la surface de formage,
   **(a3)** agencer les deux membranes avec le moule, de manière à former :
      - une première chambre étanche entre le moule et la membrane inférieure, ladite première chambre définissant un premier volume **V1** modulable, et
      - une seconde chambre étanche entre les deux membranes, ladite seconde chambre définissant un second volume **V2** modulable, nommé volume inter-membranaire, le matériau composite étant logé dans ce volume inter-membranaire **V2,**
   **(a4)** aspirer du gaz contenu dans la seconde chambre, et ainsi réduire le volume inter-membranaire **V2,** de manière à ce que les deux membranes soient toutes deux au contact du matériau composite,
   **(a5)** réaliser un accostage local de la membrane inférieure sur la surface de formage, en une zone de contact au moins, le matériau composite et les deux membranes étant également en contact, au niveau de ladite zone de contact, la phase d'agencement conduisant à la mise en place du matériau composite au sein du dispositif de formage ainsi obtenu, ledit dispositif de formage étant lui-même placé sous une pression extérieure **Pext,** qui peut être égale à la pression atmosphérique, la mise en place du matériau composite au sein du dispositif de formage correspondant au maintien du matériau composite par les deux membranes toutes deux au contact de ce dernier, avec un accostage local de la membrane inférieure sur la surface de formage, en une zone de contact au moins,
**(b)** une phase de formage intermédiaire comprenant au moins les opérations suivantes :
   - introduire du gaz dans la seconde chambre, tout en maintenant la pression **P2** en dessous de la pression extérieure **Pext,** et en particulier de la pression atmosphérique, lorsque la pression extérieure **Pext** est égale à la pression atmosphérique et, ainsi tenir localement à distance la membrane supérieure de la membrane inférieure, tout en gardant, au niveau de la zone de contact, à la fois l'accostage et le contact entre le matériau composite et les deux membranes,
   - aspirer du gaz contenu dans la première chambre, de manière à plaquer la membrane inférieure sur toute la surface de formage présente au fond du moule,
**(c)** une phase de formage final et de compactage conduisant à la forme finale souhaitée pour le matériau composite préformé, au cours de laquelle un chauffage est appliqué, lors de laquelle le gaz contenu dans la seconde chambre est retiré, de manière à venir plaquer à la fois le matériau composite et la membrane supérieure sur la membrane inférieure, elle-même plaquée sur le fond du moule, en particulier sur la surface de formage, et obtenir une réduction de la pression **P2,** de manière à assurer le compactage,
**(d)** une phase de refroidissement et une phase de démoulage du matériau composite préformé.

Le procédé selon l'invention est donc un procédé hybride mettant en œuvre deux membranes pour réaliser un formage sous pression réduite de matériaux composites. Il permet une hybridation des deux procédés de formage simple et double membrane de l'art antérieur : au départ, le placement et le maintien du matériau composite plan sont assurés grâce à la présence des deux membranes et, cette maitrise est poursuivie tout au long du procédé, car tout au long du procédé, les deux membranes sont maintenues en contact avec le matériau composite, au niveau de la zone de contact au moins, où l'ensemble membranes/matériau composite est en appui sur la surface de formage. A l'issue de la phase d'agencement **(a),** le matériau composite est maintenu compressé entre les deux membranes, la seconde chambre inter-membranaire étant avantageusement à son volume minimal, suite à l'opération **(a4),** et la membrane inférieure étant en butée sur la surface de formage, sur au moins une zone de contact, correspondant en particulier à la zone la plus haute de la surface de formage. Par la suite, les contraintes mécaniques appliquées sur le matériau composite au cours du formage intermédiaire **(b)** sont modulées, en jouant sur le volume de la seconde chambre située entre les deux membranes dans laquelle le matériau composite est disposé, ce qui permet de réduire les sollicitations mécaniques auxquelles le matériau composite est soumis, au cours du formage. Lors de l'étape de formage intermédiaire **(b),** l'invention prévoit de réduire la pression qu'exercent les deux membranes sur le matériau composite, ce qui a pour effet de réduire/éliminer le risque d'apparition de plissures, et, en particulier, de plissures issues de glissements inter-plis non contrôlés dus à une déformation en flexion. Le procédé selon l'invention prévoit une étape de formage intermédiaire **(b)** (également nommée étape de préformage) lors de laquelle, le matériau composite retrouve une liberté de mouvement qui lui assure une qualité optimale (sans défaut). Cependant, son bon positionnement est assuré grâce à la pression exercée par la membrane supérieure et l'appui sur la surface de formage au niveau de la zone de contact.

En particulier, lors de la phase de formage intermédiaire **(b),** il y a introduction d'un milieu gazeux dans la seconde chambre, ce qui conduit à l'augmentation du volume de ladite seconde chambre, avec en parallèle un maintien de la pression **P2** en dessous de la pression extérieure **Pext,** et en particulier de la pression atmosphérique, lorsque la pression extérieure **Pext** est égale à la pression atmosphérique. Ainsi, la membrane supérieure est tenue localement à distance de la membrane inférieure, tout en gardant, au niveau de la zone de contact, à la fois l'accostage et le contact entre le matériau composite et les deux membranes. Ce maintien à distance, sur une partie de sa surface, de la membrane supérieure, vis-à-vis de la membrane inférieure est obtenu du fait de la présence du milieu gazeux ajouté dans la seconde chambre, lors de la phase de formage intermédiaire **(b).** En particulier, la membrane supérieure est, également, tenue localement à distance du matériau composite (tout en gardant, au niveau de la zone de contact, à la fois l'accostage et le contact entre le matériau composite et les deux membranes).

Dans le cadre de l'invention, le rapprochement et le positionnement du matériau de renfort, sur la surface de formage sont contrôlés. Le matériau de renfort va suivre le mouvement de la première membrane lors de sa descente et son plaquage plus ou moins complet et rapide sur la surface de formage. Par contre, en augmentant le volume de la seconde chambre lors du formage intermédiaire **(b),** tout en maintenant la pression **P2** en dessous de la pression extérieure **Pext,** et en particulier de la pression atmosphérique, lorsque la pression extérieure **Pext** est égale à la pression atmosphérique, la descente de la membrane supérieure ne suit pas le matériau de renfort et la membrane inférieure, et son déplacement présente un décalage avec la membrane inférieure, à part sur une zone plus ou moins grande au niveau de la zone de contact correspondant à l'accostage initial. L'espace maintenu entre les deux membranes, lors de cette phase du formage intermédiaire **(b),** offre plus de liberté de déplacement aux fibres au sein du matériau et va minimiser les contraintes et éviter la présence de défauts dans le matériau final mis en forme. Cependant, l'appui maintenu au niveau de la zone de contact de la membrane supérieure sur le matériau composite, lui-même en appui sur la membrane inférieure, elle-même en appui sur la surface de formage permet de sécuriser le positionnement du matériau composite et permet d'éviter qu'il glisse sur la surface de formage et garantit l'obtention de la forme adéquate.

De plus, le procédé selon l'invention augmente le nombre de paramètres réglables au cours de sa mise en œuvre, et permet ainsi de moduler le formage en fonction du matériau et de la géométrie finale souhaitée, notamment. Il est également parfaitement adapté à l'automatisation.

Selon un mode de réalisation, dans le procédé selon l'invention, l'opération **(a5)** est réalisée après l'opération **(a4)** par aspiration de gaz dans la première chambre, conduisant à la réduction du volume **V1** de la première chambre, de manière à établir un pré-contact entre la membrane inférieure et la surface de formage, alors que le volume **V2** de la seconde chambre est maintenu constant.

Selon un autre mode de réalisation pouvant être combiné au précédent, tout au long de la phase de formage intermédiaire **(b),** les introduction(s) et retraits de gaz sont réalisés, de manière à ce que la pression **P1** dans la première chambre et la pression **P2** dans la seconde chambre soient contrôlées et/ou modifiées, de sorte que la pression **P1** reste inférieure à la pression **P2,** elle-même inférieure à la pression extérieure **Pext,** et en particulier inférieure à la pression atmosphérique lorsque la pression extérieure **Pext** est égale à la pression atmosphérique.

Dans le cadre de l'invention, tout au long de la phase de formage intermédiaire **(b),** un chauffage du matériau composite pourra être assuré, de manière à obtenir le ramollissement de la matière polymérique plastique. La mise en œuvre d'un tel chauffage, qui pourra intervenir comme une aide au préformage, sera adaptée par l'homme du métier, en fonction de la nature du ou des polymères constitutifs de la matière polymérique plastique. Typiquement, un chauffage à une température appartenant à la gamme allant de 40 à 250 °C, notamment entre 70 ° C et 200 °C, pourra être prévu.Cependant, le procédé selon l'invention est également parfaitement adapté pour effectuer des préformages dits à froid (température ambiante, de l'ordre de 25°C), en fonction de la matière plastique polymérique présente dans le matériau composite. De manière classique, comme dans les procédés de l'art antérieur, l'étape finale de formage et de compactage est réalisée à chaud, en particulier, à une température appartenant à la gamme allant de 40 à 250 °C, notamment entre 70°C et 200, en fonction de la matière plastique polymérique présente dans le matériau composite.

Lorsqu'un chauffage est appliqué, et ce à n'importe quel stade du procédé, la montée en température modifie les propriétés mécaniques du matériau, le volume des gaz et la pression. En jouant sur le volume inter-membranaire et/ou le volume de la première chambre, il est ainsi possible de mieux adapter ce dernier à ces modifications.

Selon des modes de réalisations particuliers, le procédé selon l'invention comprendra une étape de montée en température, de sorte que tout au long de la phase de formage intermédiaire, un chauffage du matériau composite est assuré, pour obtenir le ramollissement de la matière polymérique plastique et en ce que, lors de l'étape de montée en température conduisant à la température de chauffage souhaitée, les volumes **V1** et **V2** de la première et de la seconde chambre sont contrôlés pour éviter leur augmentation.

Selon une première variante de réalisation des procédés selon l'invention, la phase de formage intermédiaire **(b)** est réalisée en aspirant du gaz contenu dans la première chambre, de manière à plaquer la membrane inférieure sur toute la surface de formage présente au fond du moule, tout en introduisant du gaz dans la seconde chambre et en maintenant la pression **P2** dans la seconde chambre en dessous de la pression extérieure **Pext,** et en particulier de la pression atmosphérique, lorsque la pression extérieure **Pext** est égale à la pression atmosphérique et, ainsi, augmenter le volume inter-membranaire **V2,** et tenir localement à distance la membrane supérieure de la membrane inférieure, tout en gardant, au niveau de la zone de contact, à la fois l'accostage et le contact entre le matériau composite et les deux membranes. De manière avantageuse, la baisse du volume **V1** de la première chambre est égale ou sensiblement égale à l'augmentation du volume **V2** de la seconde chambre. Dans le cadre de l'invention, par sensiblement égale, on entend égale à plus ou moins 5% près, voire plus ou moins 2% près.

Selon une deuxième variante de réalisation des procédés selon l'invention, la phase de formage intermédiaire **(b)** comprend les opérations successives suivantes :
**(b1)** aspirer du gaz contenu dans la première chambre, conduisant à la réduction du volume **V1,** de manière à abaisser la membrane inférieure, en une position intermédiaire, tout en introduisant du gaz dans la seconde chambre et en maintenant la pression **P2** dans la seconde chambre en dessous de la pression extérieure **Pext,** et en particulier de la pression atmosphérique, lorsque la pression extérieure **Pext** est égale à la pression atmosphérique et, ainsi, augmenter le volume inter-membranaire **V2,** et tenir localement à distance la membrane supérieure de la membrane inférieure, tout en gardant, au niveau de la zone de contact, à la fois l'accostage et le contact entre le matériau composite et les deux membranes,
**(b2)** aspirer du gaz contenu dans la première chambre, de manière à plaquer la membrane inférieure sur toute la surface de formage présente au fond du moule, tout en maintenant constant le volume inter-membranaire **V2.**

En particulier, l'étape **(b2)** implique, ensuite lors de l'étape (c), un plaquage retardé mais synchrone de la seconde membrane sur le matériau composite à former, la première membrane et la surface de formage.

De manière avantageuse, dans la deuxième variante de réalisation des procédés selon l'invention également, lors de l'étape **(b1),** la baisse du volume **V1** de la première chambre est égale ou sensiblement égale à l'augmentation du volume **V2** de la seconde chambre.

Selon une troisième variante de réalisation des procédés selon l'invention, la phase de formage intermédiaire **(b)** comprend les opérations successives suivantes :
**(b'1)** aspirer du gaz contenu dans la première chambre, conduisant à la réduction du premier volume **V1,** de manière à abaisser la membrane inférieure, en une position intermédiaire, tout en introduisant du gaz dans la seconde chambre et en maintenant la pression **P2** dans la seconde chambre en dessous de la pression extérieure **Pext,** et en particulier de la pression atmosphérique, lorsque la pression extérieure **Pext** est égale à la pression atmosphérique et, ainsi, augmenter le volume inter-membranaire **V2,** et tenir localement à distance la membrane supérieure de la membrane inférieure, tout en gardant, au niveau de la zone de contact, à la fois l'accostage et le contact entre le matériau composite et les deux membranes,
**(b'2)** aspirer du gaz contenu dans la seconde chambre et ainsi réduire le volume inter-membranaire **V2,** de manière à abaisser la membrane supérieure et à placer les deux membranes toutes deux au contact du matériau composite,
**(b'3)** aspirer du gaz contenu dans la première chambre, de manière à plaquer la membrane inférieure sur toute la surface de formage présente au fond du moule, tout en introduisant du gaz dans la seconde chambre et en maintenant la pression **P2** dans la seconde chambre en dessous de la pression extérieure **Pext,** et en particulier de la pression atmosphérique, lorsque la pression extérieure **Pext** est égale à la pression atmosphérique et, ainsi, augmenter le volume inter-membranaire **V2,** et tenir localement à distance la membrane supérieure de la membrane inférieure, tout en gardant, au niveau de la zone de contact, à la fois l'accostage et le contact entre le matériau composite et les deux membranes.

De manière avantageuse, dans cette troisième variante de réalisation des procédés selon l'invention également, à l'opération **(b'1)** et/ou à l'opération **(b'3),** la baisse du volume **V1** de la première chambre est égale ou sensiblement égale à l'augmentation du volume **V2** de la seconde chambre.

Dans la troisième variante de réalisation des procédés selon l'invention également, les opérations **(b'1)** à **(b'2)** peuvent, notamment, être répétées, par exemple une à dix fois, de manière à abaisser graduellement la membrane inférieure et la membrane supérieure.

Dans les procédés selon l'invention, quel que soit le mode ou la variante de mise en œuvre, en général, à l'étape **(a2)** et à l'étape **(a3),** les deux membranes sont disposées horizontalement. Ceci permet de mieux maitriser le positionnement du matériau composite en forme de plaque, en appui sur la membrane inférieure, au début du procédé. La position horizontale est conservée lors de l'étape **(a3)** qui consiste simplement à former des chambres et donc à obtenir une étanchéité entres les membranes d'une part et la membrane inférieure et le moule d'autre part, comme cela ressortira des explications qui suivront dans la description.

Dans les procédés selon l'invention, quel que soit le mode ou la variante de mise en œuvre, en général, à l'issue de l'étape **(a2),** les deux membranes sont planes, ou encore tendues de manière à minimiser leur déformation en flexion (hors plan) induite sous l'effet de leur poids propre. Cependant, les membranes sont tendues, en évitant une élongation plane (c'est-à-dire dans le plan de ladite membrane) trop importante, et ce pour conserver leur capacité de déformation élastique, voire plastique. Pour cela, chaque membrane est tendue, mais, de manière préférée, son élongation plane reste inférieure à 5 %.

Selon un mode de réalisation, compatible avec tous les modes et variantes de mise en œuvre des procédés selon l'invention, lors de phase de refroidissement, la pression dans la première chambre pourra être augmentée, en particulier pour réduire les frottements avec le moule. Alors, la pression **P2** dans la seconde chambre sera inférieure à la pression **P1** dans la première chambre, elle-même inférieure ou égale à la pression extérieure **Pext,** et en particulier à la pression atmosphérique, lorsque la pression extérieure **Pext** est égale à la pression atmosphérique (1,013 bar). En particulier, une pression **P1** comprise dans la gamme allant de 850 mbar à la pression atmosphérique (1,013 bar) pourra être atteinte dans la première chambre, lors de la phase de refroidissement, lorsque la pression extérieure **Pext** est égale à la pression atmosphérique. Cette augmentation de la pression sera obtenue par ajout de gaz dans la première chambre, notamment par ajout d'air. Cependant, les deux membranes resteront plaquées sur le matériau composite et sur la surface de formage, et donc les volumes **V1** et **V2** seront maintenus constants.

Les procédés selon l'invention sont adaptés au formage de matériaux composites dits secs, destinés aux procédés directs de fabrication de pièces composites. En particulier, la matière polymérique plastique représente au plus 10% de la masse totale du matériau composite, de préférence de 0,5 à 10% de la masse totale du matériau composite se présentant sous la forme d'une plaque, et préférentiellement de 2 à 6% de la masse totale du matériau composite. Les procédés selon l'invention peuvent également être utilisés pour le formage de matériaux composites préimprégnés qui comprennent une part de matière plastique plus importante, supérieure à 10%. En particulier, la matière polymérique plastique pourra représenter, dans ce cas, au moins 20% de la masse totale du matériau composite se présentant sous la forme d'une plaque et jusqu'à 60% de la masse totale du matériau composite se présentant sous la forme d'une plaque, et, de manière préférée de 20 à 40 % de la masse totale du matériau composite se présentant sous la forme d'une plaque.

Quel que soit le matériau composite se présentant sous la forme d'une plaque, la matière polymérique plastique est, notamment, choisie parmi les polymères thermoplastiques, les polymères thermodurcissables, les polymères comprenant une part thermoplastique et une part thermoréticulable ou thermoréticulée, et leurs mélanges.

Par ailleurs, de manière classique, le matériau composite est formé de fibres de verre, de carbone, d'aramide ou de céramique, ou de toutes autres fibres de renfort connues de l'homme du métier, les fibres de carbone et les fibres de verre étant particulièrement préférées.

Selon certains modes de réalisation, comme c'est notamment le cas dans les exemples, le matériau composite se présentant sous la forme d'une plaque comprend un empilement de couches de renfort fibreux, lesdites couches de renfort fibreux étant notamment choisies parmi les tissus et les nappes unidirectionnelles de fibres de renfort. Cet empilement de couches de renfort fibreux a un caractère unitaire, obtenu par la matière plastique polymérique et/ou par tout autre moyen, du type couture ou tricotage.

L'invention a également pour objet un dispositif pour préformer un matériau composite se présentant sous la forme d'une plaque, comprenant :
- un moule dont le fond non plan définit une surface de formage pour un matériau composite à préformer,
- une première membrane, nommée membrane inférieure, une seconde membrane, nommée membrane supérieure, lesdites deux membranes étant déformables élastiquement et imperméables aux gaz, et étant placées l'une au-dessus de l'autre et s'étendant au-dessus du fond du moule,
- un dispositif d'agencement permettant de former avec les deux membranes et le moule :
   - une première chambre étanche entre le moule et la membrane inférieure, ladite première chambre définissant un premier volume **V1** modulable, et
   - une seconde chambre étanche entre les deux membranes, ladite seconde chambre définissant un second volume **V2** modulable, nommé volume inter-membranaire, qui est destinée à recevoir le matériau composite à préformer,
   - la première et la seconde chambres étant chacune équipées, d'un obturateur de sortie, permettant d'assurer la sortie du milieu gazeux contenu dans ladite chambre, lesdits obturateurs de sortie étant chacun reliés à un circuit équipé d'un régulateur de la circulation et de la pression en milieu gazeux permettant d'obtenir une aspiration du milieu gazeux depuis la chambre concernée,
caractérisé en ce que la seconde chambre est équipée d'un obturateur d'entrée, permettant d'assurer l'entrée d'un milieu gazeux dans la seconde chambre, ledit obturateur d'entrée étant relié à un circuit équipé d'un régulateur de la circulation et de la pression en milieu gazeux, permettant d'assurer l'introduction d'un milieu gazeux dans la seconde chambre.

Selon un mode de réalisation préféré, la première chambre est équipée d'un obturateur d'entrée, permettant d'assurer l'entrée d'un milieu gazeux dans la première chambre, ledit obturateur d'entrée étant relié à un circuit équipé d'un régulateur de la circulation et de la pression en milieu gazeux, permettant d'assurer l'introduction d'un milieu gazeux dans la première chambre. Un tel dispositif permet, notamment, d'augmenter la pression dans la première chambre, en particulier pour réduire les frottements avec le moule, lors de la phase de refroidissement.

Dans les dispositifs de formage proposés dans l'art antérieur, seuls les obturateurs de sortie au niveau des deux chambres existent et ont pour fonction de sortir de l'air de l'espace inter-membranaires et de l'espace présents entre la membrane inférieure et le moule. Ainsi, les pressions et volumes dans les deux chambres ne peuvent être que réduits au cours de la mise en forme. Dans le cadre de l'invention, un obturateur d'entrée a été ajouté au niveau de la seconde chambre (chambre inter-membranaire), voire également au niveau de la première chambre (chambre située entre la membrane inférieure et le moule), ce qui permet ainsi d'augmenter le volume et/ou la pression dans la chambre concernée, et ainsi moduler le procédé et réduire les contraintes imposées au matériau lors de l'étape intermédiaire de formage, voire lors du refroidissement.

Dans les dispositifs selon l'invention quels qu'ils soient, certains ou tous les obturateurs d'entrée et de sortie peuvent correspondre à des vannes ou robinets différents. Il est également possible que les obturateurs d'entrée et de sortie équipant une même chambre soient, en fait, un obturateur unique comprenant une entrée et une sortie qui est relié à un système pneumatique pour moduler l'obturateur en mode entrée ou sortie dans le sens chambre/circuit extérieur.

Dans certains modes de réalisation, il pourra être prévu que le dispositif comprenne un circuit externe pour la circulation de gaz de la première chambre vers la seconde chambre. Avec une telle configuration, il est plus aisé de modifier simultanément les volumes des deux chambres.

### Brève description des dessins

[Fig. 1] La **figure 1** est une représentation schématique en coupe d'un dispositif utilisé dans l'art antérieur, dans des procédés de formage mettant en œuvre une seule membrane (procédé dit simple membrane).
[Fig. 2] La **figure 2** est une représentation schématique en coupe d'un dispositif utilisé dans l'art antérieur, dans des procédés de formage mettant en œuvre deux membranes superposées (procédé dit double membrane).
[Fig. 3A] La **figure 3A** est une représentation schématique en coupe d'un dispositif selon l'invention, adapté à la mise en œuvre de procédés de formage selon l'invention.
[Fig. 3B] La **figure 3B** est une représentation schématique en coupe d'un autre dispositif selon l'invention, adapté à la mise en œuvre des procédés de formage selon l'invention, dans lesquels la première chambre est équipée d'un obturateur pour l'entrée de gaz.
[Fig. 4] La **figure 4** est une vue en perspective d'un dispositif de formage selon l'invention, mettant en évidence un dispositif d'assemblage permettant d'assurer la formation des deux chambres et le maintien des deux membranes sur le moule.
[Fig. 5] La **figure 5** est une vue partielle en perspective mettant en évidence les différentes parties du dispositif d'assemblage illustré en **figure 4****.**
[Fig. 6] La **figure 6** est une représentation schématique de différentes étapes d'un procédé selon l'invention, conforme à la première variante de réalisation.
[Fig. 7] La **figure 7** est une représentation schématique de différentes étapes d'un procédé selon l'invention, conforme à la deuxième variante de réalisation.
[Fig. 8] La **figure 8** est une représentation schématique de différentes étapes d'un procédé selon l'invention, conforme à la troisième variante de réalisation.
[Fig. 9] La **figure 9** est une représentation schématique en coupe d'un dispositif selon l'invention, comprenant un circuit externe pour la circulation de gaz de la première chambre vers la seconde chambre.
[Fig. 10] La **figure 10** est une vue en perspective de la protubérance présente au niveau de la zone de formage du moule utilisé dans les exemples 1a à 3.
[Fig. 11] La **figure 11** représente le matériau préformé obtenu dans l'exemple comparatif 1b et met en évidence la présence de plissures constituant des défauts.

### Description des modes de réalisation

Avant de rentrer dans la description de différentes variantes de mise en œuvre de l'invention, certaines notions et termes vont être définis.

Un matériau composite, se présentant sous la forme d'une plaque, peut être composé d'un seul matériau à base de fibres de renfort et de matière polymérique plastique, ou correspondre à un empilement de tels matériaux. Le matériau composite de départ est plan, et est qualifié de plaque pour rendre compte du fait que sa largeur et sa longueur sont largement supérieures à son épaisseur, bien qu'il puisse avoir une certaine épaisseur. Un matériau sous la forme d'une plaque présentera, en particulier, une largeur et une longueur, chacune au moins égale à 10 fois, voire au moins égale à 10 à 1000 fois l'épaisseur du matériau composite de départ. Dans le cadre de l'invention, les matériaux composites de départ se présentant sous la forme d'une plaque auront, notamment, une épaisseur de 0,2 à 50 mm, de préférence de 0,5 à 20 mm.

Tout matériau composite de départ utilisé dans des opérations de formage dans l'art antérieur pourra être utilisé dans le cadre de l'invention. De tels matériaux comprennent une ou plusieurs couches fibreuses de renfort, notamment une ou plusieurs couches de fibres de renfort choisies parmi les fibres de verre, de carbone, d'aramide ou de céramique, les fibres de carbone et les fibres de verre étant particulièrement préférées.

Un tel matériau composite sous la forme d'une plaque peut être formé d'un ensemble de fibres de renfort liées entre elles par une matière plastique polymérique ou d'un empilement de couches fibreuses de renfort comprenant une matière plastique polymérique, lesdites couches étant liées entre elles par la matière plastique polymérique et/ou par tout autre moyen adapté, notamment par couture ou par tricotage.

En particulier, le matériau composite fibreux comprend une couche de renfort fibreuse ou un empilement de couches de renfort fibreuses, et est notamment choisi parmi :
- les nappes unidirectionnelles dont le maintien structurel peut être assuré par un liant polymérique, par couture ou par un tricot ;
- les assemblages de nappes unidirectionnelles superposées présentant différentes orientations, constituant des renforts multiaxiaux, couramment nommés tissus non tissés (nommées en anglais « Non-Crimp Fabric » ou NCF), maintenus par couture ou par un tricot ;
- les tissus (ou tissés) dont la structure présente des fils ou mèches entrelacés suite à l'insertion de fils, dits fils de trame, entre les fils qu'ils croisent, dits fils de chaines, présentant notamment une armature taffetas, sergé ou satin, ou encore ceux du type interlock, tels que décrits par C. Dufour, F. Boussu, P. Wang, D. Soulat et X. Legrand : « Analyse du comportement de renforts tissés interlock lors du procédé de préformage » dans le 21ème Congrès Français de Mécanique, 2013, pages 5-6 ;
- les tresses dont la structure présente des fils ou des mèches entrelacés, mais dont l'entrelacement n'est pas issu d'un procédé d'insertion. De telles tresses peuvent, notamment, être du type bi-axiales, triaxiales ou interlocks. Voir notamment la thèse de Boris Duchamp (https://www.theses.fr/197146112) Contribution à l'élaboration de préformes textiles pour le renforcement de réservoirs souples sous la direction de Damien Soulat et de Xavier Legrand - Lille 1, 2016 et M. Kowalski, « Développement de croisements de raidisseurs composites : Technologie, modélisation et optimisation », Thèse, Université Lille 1, 2015., et T. Liao et S. Adanur, « A novel approach to Three-dimensional modeling of interlaced fabric structures », Text. Res. J., Vol. 68, pages 841-847, 1998 ;
- les tricots, obtenus par entrelacement de boucles les unes dans les autres. De tels tricots peuvent, notamment, être du type en mailles cueillies (ou tricots en trame), en mailles jetées (ou tricots en chaine) ou interlocks. Les tricots interlocks sont une déclinaison des deux autres structures avec des entrelacements de boucles dans l'épaisseur, soit entre différentes couches de boucles, soit en créant une structure ordonnée sur la base de motifs tridimensionnels répétables et répétés.

En particulier, le matériau composite **I** comprend un empilement de couches de renfort fibreuses, telles que précédemment définies, et au moins une couche poreuse en une matière plastique polymérique. Une telle couche poreuse polymérique peut notamment se présenter sous la forme d'un film poreux, d'une grille, d'un dépôt de poudre, d'un tissu ou, de préférence, d'un non-tissé ou d'un voile.

En particulier, le matériau composite peut être constitué d'une couche fibreuse de renfort associée sur chacune de ses faces à une couche poreuse en une matière plastique polymérique ou encore d'un empilement de plusieurs couches fibreuses de renfort, entre lesquelles est(sont) intercalée(s) une ou plusieurs couches poreuses en une matière plastique polymérique. L'association des couches entre elles donnant un caractère unitaire au matériau composite est assurée avant son placement dans le dispositif selon l'invention qui va assurer sa mise en forme. La liaison préalable des fibres, voire des couches, entre elles, pourra être obtenue uniquement grâce au caractère collant à chaud de la matière polymérique plastique présente, ou bien être obtenue ou complétée par l'utilisation d'autres types de liaison tel qu'une couture ou un tricot.

A titre d'exemples de matériaux composites, on peut citer :
- les matériaux composites constitués d'une nappe unidirectionnelle de fibres de renfort associée sur chacune de ses faces à une(des) couche(s) poreuse(s) en une matière plastique polymérique, et en particulier à un non-tissé, et leurs empilements,
- les ensembles de plusieurs nappes unidirectionnelles de fibres de renfort orientées selon au moins deux directions différentes, avec une ou plusieurs couche(s) poreuse(s) en une matière plastique polymérique présente(s) entre les nappes unidirectionnelles et en surface, ledit ensemble étant lié par couture ou par tricotage.

Il pourra s'agir de matériaux secs (c'est-à-dire que la matière polymérique plastique représente au plus 10% de la masse totale du matériau composite, de préférence de 0,5 à 10% de la masse totale du matériau composite, et préférentiellement de 2 à 6% de la masse totale du matériau composite se présentant sous la forme d'une plaque) ou de préimprégnés.

De tels matériaux sont notamment décrits dans les demandes de brevet ou les brevets EP 1125728, US 6,828,016, WO 00/58083, WO 2007/015706, WO 2006/121961, US 6,503,856, US 2008/7435693, WO 2010/046609, WO 2010/061114 et EP 2 547 816, US 2008/0289743, US 2007/8361262, US 2011/9371604, WO 2011/048340, EP 2547816, WO 2010/067003, US 8,361,262, US 9,371,604, WO 2011/113751 et EP 2491175, ou encore dans le brevet US 9,259,859.

Par « matière polymérique plastique », on entend tout polymère ou mélange de polymères qui va pouvoir être déformé, avec ou sans application de chaleur. Ainsi, le matériau composite en forme de plaque qui contient une telle matière polymérique plastique va pouvoir se déformer et être moulé à la forme souhaitée, par application du procédé selon l'invention. Il peut donc s'agir d'un polymère thermoplastique, thermodurcissable, d'un polymère comprenant une part thermoplastique et une part thermoréticulable ou thermoréticulée ou d'un mélange de tels polymères. Toute matière polymérique plastique classiquement utilisée pour la fabrication de matériaux composites, destinés à la réalisation de pièces composites convient. A titre d'exemple de polymères thermodurcissables, on peut citer les résines époxy, phénolique, bismaléimide, cyanate, et les mélanges de telles résines. A titre d'exemple de polymères thermoplastiques appropriés, on peut citer ceux choisis parmi : les polyamides (PA : PA6, PA12, PA11, PA6,6, PA6,10, PA6,12, ...), copolyamides (CoPA), les polyamides - block éther ou ester (PEBAX, PEBA), polyphtalamides (PPA), les polyesters (Polyéthylène téréphtalate -PET-, Polybutylène téréphtalate - PBT-...), les copolyesters (CoPE), les polyuréthanes thermoplastiques (TPU), les polyacétales (POM...), les polyoléfines (PP, HDPE, LDPE, LLDPE....), Polyéthersulfones (PES), les polysulfones (PSU...), les polyphénylènes sulfones (PPSU...), polyétheréthercétones (PEEK), polyéthercétonecétone (PEKK), poly(sulfure de phénylène) (PPS), polyétherimides (PEI), les polyimides thermoplastiques, les polymères à cristaux liquides (LCP), les phénoxys, les copolymères à blocs tels que les copolymères styrène-butadiene-méthylméthacrylate(SBM), les copolymères méthylméthacrylate-acrylate de butyl-méthylméthacrylate (MAM) et leurs mélanges. Il est également possible que le matériau composite se présentant sous la forme d'une plaque contienne, en tant que matière polymérique plastique, un polymère thermoplastique partiellement réticulé ou partiellement réticulable, comme décrit dans la demande WO 2019/102136. Selon certains modes de réalisation, la matière polymérique plastique du matériau composite se présentant sous la forme d'une plaque est constituée d'un polymère thermoplastique ou d'un polymère comprenant une part thermoplastique ou d'un mélange de tels polymères.

Par « membrane », on entend une cloison mince et souple, ou en d'autres termes un film souple. De manière classique, dans les procédés de formage utilisant un moule ouvert, fermé par l'utilisation de une (procédé simple membrane) ou deux membranes superposées (procédé double membrane), la ou lesdites membranes sont aptes à subir des déformations élastiques. Le fait qu'une membrane puisse subir des déformations élastiques n'est pas exclusif, cela n'exclut pas le fait qu'il y ait également une déformation plastique. Dans le cas de membranes réutilisables, les déformations sont exclusivement élastiques. Dans le cas de membranes jetables, destinées à un usage unique, les déformations peuvent être élasto-plastiques (une part d'élasticité, une part de plasticité). Ainsi, une telle membrane n'est pas forcément en un matériau élastomère, mais pourra être en un matériau élastomère, comme décrit dans le brevet US 9,259,859, au nom de Cytec. Les membranes pourront notamment être en caoutchouc, nylon ou silicone. Certains exemples de membranes pouvant être mis en œuvre dans les procédés et dispositifs de l'invention sont donnés dans le tableau 1 ci-dessous.

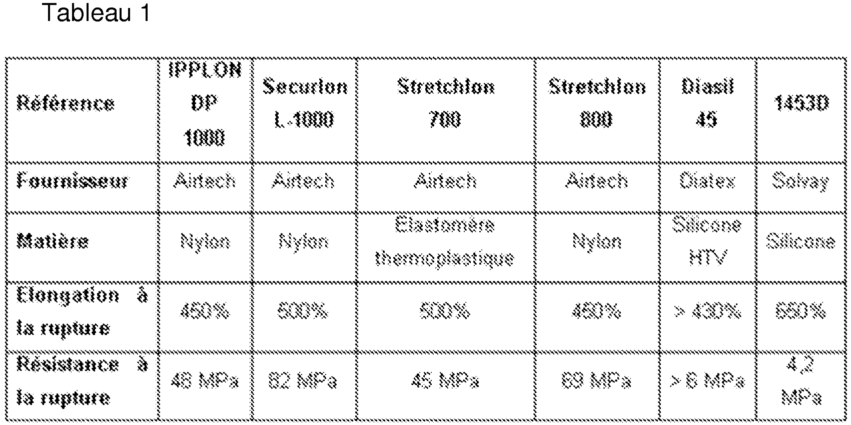

Les % d'élongation et les résistances à la rupture sont mesurés selon la norme ASTM D882.

En général, on utilisera des membranes présentant une épaisseur de 10 à 3000 µm, typiquement de 50 à 100 µm.

Les membranes utilisées dans le cadre de l'invention sont qualifiées d'imperméable aux gaz, car elles constituent une barrière aux gaz. En d'autres termes, elles sont non poreuses et n'autorisent pas le passage de gaz au travers de leur épaisseur, ce qui rend possible l'obtention d'une chambre étanche.

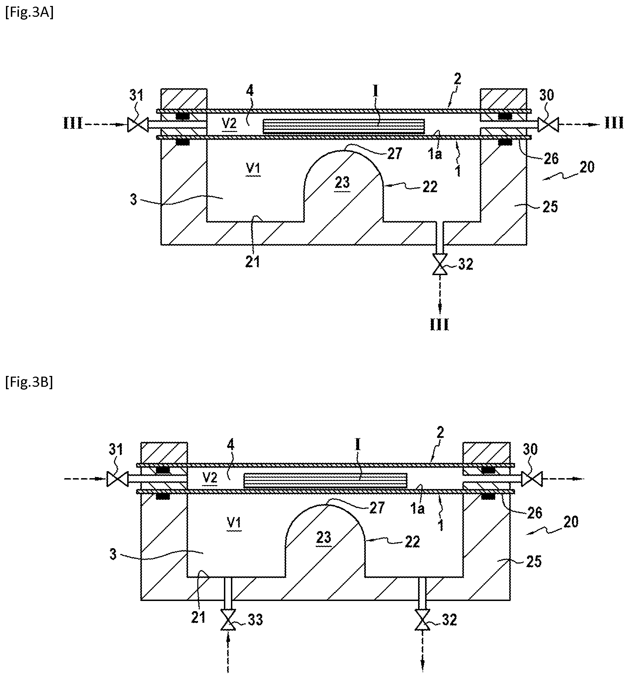

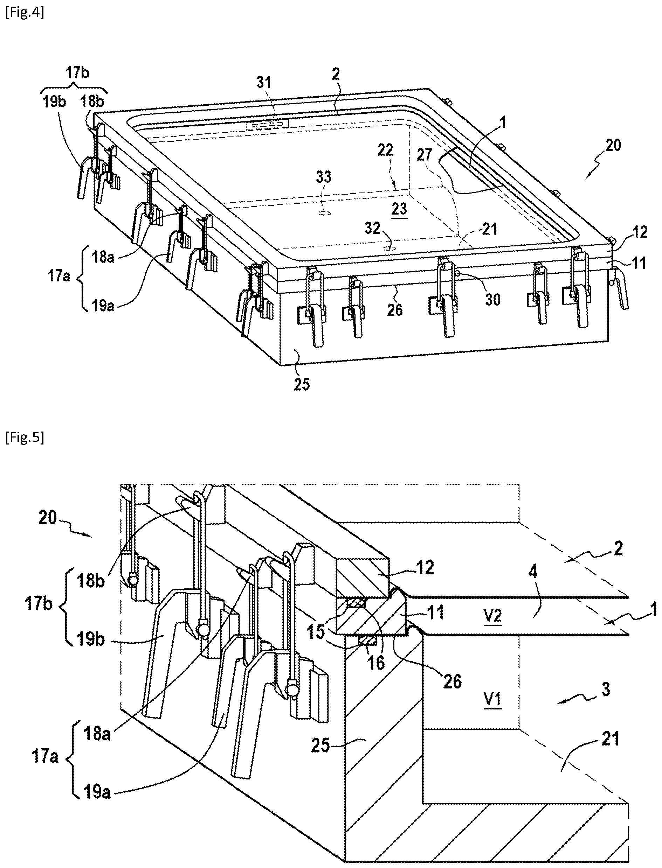

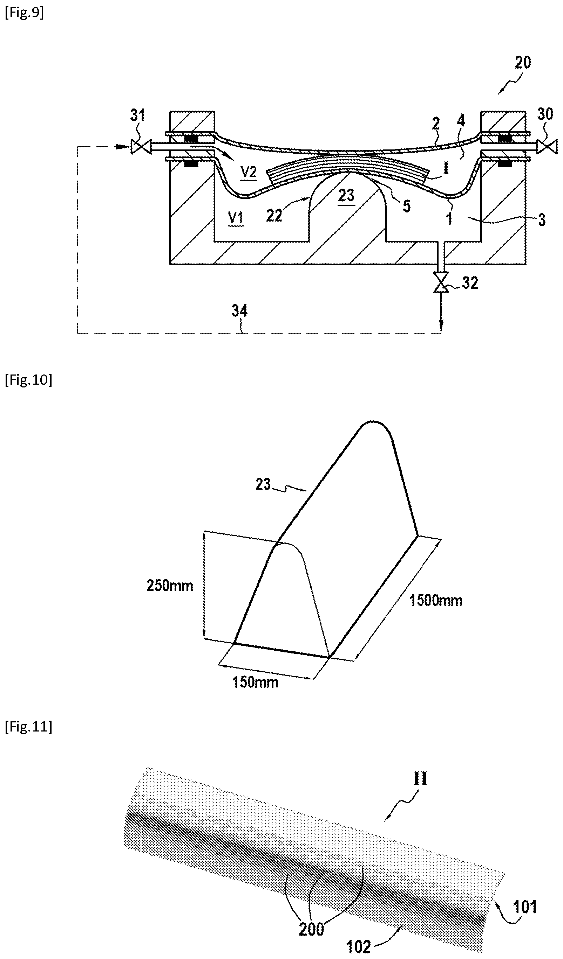

Des dispositifs conformes à l'invention sont présentés sur les **figures 3A, 3B** et **9****.** Les **figures 4** et **5** présentent de manière plus détaillée, un exemple de tels dispositifs.

La **figure 3A** présente un dispositif selon l'invention, une fois que le matériau composite **I** de départ a été mis en place et que les deux membranes **1** et **2** sont agencées sur le moule **20** pour former deux chambres étanches **3** et **4.** Le moule **20** définit une cuve ou cavité et présente en son fond **21** une surface en forme qui va constituer la surface de formage **22** pour le matériau composite **I**. La surface de formage **22** est non plane et de forme tridimensionnelle, par opposition au matériau composite **I** de départ qui est plan et souvent qualifié de bidimensionnel par l'homme du métier, bien qu'il présente une certaine épaisseur. Dans l'exemple illustré, cette surface de formage **22** correspond à une protubérance **23** de forme convexe qui s'étend au milieu du fond **21** du moule **20.** Dans l'exemple illustré, le moule est de forme carré et cette protubérance **23** est symétrique et présente un axe parallèle à deux des parois périphériques opposées **25** du moule, comme cela ressort de la **figure 4****.** Une vue en perspective d'une telle protubérance **23,** mais présentant une section droite transversale effilée, est présentée en **figure 10****.** Il est également possible de prévoir d'autre forme pour la surface de formage **22,** telles que des formes conférant au final une forme en U, C, L ou V au matériau composite, une fois ce dernier mis en forme. D'autres formes plus complexes, comprenant plusieurs embossages, peuvent également être prévues en tant que surface de formage **22.**

La cavité définie par le moule **20** est fermée par une première membrane **1** qui s'étend au-dessus du moule et est apposée sur le bord périphérique **26** du moule, comme mis en évidence sur la **figure 5** qui est une vue partielle en perspective d'un dispositif selon l'invention. Un dispositif d'agencement permet de créer une chambre étanche entre la première membrane **1** et le moule **20,** nommée première chambre **3.** Le caractère étanche est assuré par tout moyen adapté. Dans l'exemple illustré **figures 4** et **5****,** un joint **16** est prévu entre le bord périphérique **26** du moule et la membrane **1** et un cadre **11** est disposé sur la membrane **1** pour venir prendre appui sur le bord périphérique **26** du moule et pincer la membrane inférieure **1.** Dans l'exemple illustré, des systèmes de serrage, du type grenouillère **17a,** comprenant un crochet **18a** sur le cadre **11** et une attache **19a** sur la face externe de la paroi périphérique **25** du moule **20,** sont utilisés pour pincer et fixer la membrane **1** sur le moule **20.** Dans l'exemple illustré, une rainure **15** est aménagée sur le bord périphérique **26** du moule, pour permettre l'insertion du joint **16.** De manière avantageuse, dans l'exemple illustré, il est également prévu une butée tout le long du bord périphérique **26** du moule pour faciliter le positionnement et le calage du cadre **11.** Ainsi, l'épaisseur du cadre **11** va définir l'espace entre les deux membranes et pourra être ajusté, en fonction de l'épaisseur du matériau composite **I** à mettre en forme.

La première membrane **1** s'étend horizontalement et va permettre de soutenir et maintenir en position le matériau composite **I** qui va être déposé sur la face supérieure **1a,** de cette première membrane **1.**

Une deuxième membrane **2** s'étend au-dessus de la première membrane **1,** le matériau composite **I** étant donc situé entre ces deux membranes. La première membrane **1** est donc qualifiée de membrane inférieure et la deuxième membrane **2** de membrane supérieure. Dans l'exemple illustré, la membrane supérieure **2** s'étend parallèlement à la membrane inférieure **1,** bien qu'une extension décalée par rapport au plan horizontal puisse être prévue, en particulier pour la membrane supérieure **2.** Les deux membranes **1** et **2** sont donc placées l'une au-dessus de l'autre et s'étendent au-dessus du fond **21** du moule **20,** et en particulier, au-dessus de la surface de formage **22.**

De la même manière que pour la première membrane **1,** un dispositif d'agencement permet de créer une chambre étanche entre la membrane inférieure **1** et la membrane supérieure **2.** Cette chambre est nommée seconde chambre **4** ou chambre inter-membranaire. Le caractère étanche est assuré par tout moyen adapté. Dans l'exemple illustré, un joint **16** est prévu entre la face supérieure du cadre **11** et la membrane supérieure **2** et un cadre **12** est disposé sur la membrane supérieure **2** pour venir prendre appui sur le cadre **11** et pincer la membrane supérieure **2.** Des systèmes de serrage **17b,** du type grenouillère, comprenant un crochet **18b** sur le cadre **12** et une attache **19b** sur la face externe de la paroi périphérique **25** du moule **20,** sont utilisés pour pincer la membrane supérieure **2** et fixer le cadre **12.** Dans l'exemple illustré, une rainure **15** est aménagée sur la face supérieure du cadre **11,** pour permettre l'insertion du joint **16.** Il est également prévu une butée sur le cadre **11,** pour permettre le positionnement et le calage du cadre **12.** Tout autre système de serrage du type serrage par boulonnage ou par bridage peut également être utilisé à la place des grenouillères **17a** et/ou **17b.** Les cadres permettent de maintenir les membranes sur le moule.

Dans l'exemple illustré, les cadres **11** et **12** et les joints **16** et les systèmes de serrage **17a** et **17b** constituent un dispositif d'agencement **9** permettant de former les deux chambres étanches **3** et **4.**

L'épaisseur du cadre **11** va définir l'espace entre les deux membranes et donc jouer sur le volume initial **V2** de la seconde chambre **4.** Cette épaisseur du cadre **11** pourra être ajustée, en fonction de l'épaisseur du matériau composite **I** à mettre en forme et de la dimension de la pièce finale souhaitée. Par exemple, pour des pièces présentant une plus grande dimension de 50 cm, l'épaisseur peut n'être que de quelques centimètres, voire moins. Pour des pièces présentant une plus grande dimension supérieure à 2 m, l'épaisseur est augmentée pour faciliter la manipulation et éviter que le cadre ne se déforme (plie sous son propre poids ou se voile).

Dans l'exemple illustré **figure 3A****,** qui présente le dispositif avant toute modification de la pression dans l'une ou l'autre des chambres et donc au début du procédé une fois que les différents éléments du dispositif sont assemblés (fin de l'opération **a3**), la membrane inférieure **1** est placée à distance du sommet **27** de la protubérance **23,** mais ces derniers pourraient déjà être en contact. De même, la membrane supérieure **2** se trouve à distance du matériau composite **I,** mais ces derniers pourraient également être en contact. De manière avantageuse, la distance maximale entre la membrane supérieure **2** et le matériau de renfort I d'une part, et la distance maximale entre la membrane inférieure **1** et la partie la plus haute du fond **21** du moule **20** (sommet **27** de la protubérance **23** dans l'exemple illustré) seront, préférentiellement d'au plus 20 cm, et de préférence correspondront à une distance de 0,5 à 15 cm.

Le moule **20** est équipé d'un obturateur de sortie **32** permettant de retirer tout ou partie de l'air ou du milieu gazeux **III** (nommé également gaz **III**) contenu à l'intérieur de la première chambre **3** formée par le moule **20** et la membrane inférieure **1.** Ainsi, compte tenu du caractère souple et élastique de la membrane inférieure **1,** cet obturateur **32** va permettre de réduire le volume **V1** de la première chambre **3,** voire réduire également sa pression **P1,** lorsque le volume minimal de cette chambre aura été atteint.

La chambre inter-membranaire **4** est, quant à elle, équipée d'un obturateur de sortie **30** permettant de retirer tout ou partie de l'air ou du milieu gazeux **III** contenu à l'intérieur de cette dernière, mais également d'un obturateur d'entrée **31** permettant d'ajouter de l'air ou un autre milieu gazeux **III** à l'intérieur de la chambre inter-membranaire **4.** Ainsi, compte tenu du caractère souple et élastique des deux membranes **1** et **2,** ces obturateurs vont permettre de moduler le volume **V2** de la deuxième chambre **4** inter-membranaire et/ou sa pression **P2.** En particulier, dans le cadre de l'invention, le volume **V2** va pouvoir être augmenté à certains stades du procédé, pour réduire les contraintes mécaniques appliquées sur le matériau composite **I,** par contrôle des zones de contact, en compensant, notamment les diminutions du volume **V1** et offrir un degré de déformation supplémentaire au matériau composite **I,** lors d'une phase de formage intermédiaire.

Les deux membranes **1** et **2** étant déformables élastiquement, voire également plastiquement, mais imperméables aux gaz **III,** et les chambres formées étant hermétiques aux gaz lorsque les obturateurs sont en position fermés, ceci évite les transferts de gaz au travers des membranes ou du fait de la présence de fuite, notamment lors des opérations d'aspiration ou d'injection de gaz et donc un contrôle adéquat des volumes **V1** et **V2** des chambres **3** et **4,** grâce aux obturateurs.

Dans l'exemple illustré, des passages pour lesdits obturateurs **30** et **31** sont donc aménagés dans le cadre **11** positionné entre les deux membranes **1** et **2.**

A titre de comparaison, les **figures 1** et **2** présentent, respectivement, les dispositifs simple membrane et double membrane de l'art antérieur, avec utilisation des mêmes signes de référence pour les parties du dispositif qui sont communes avec ceux de l'invention.

Selon un mode de réalisation d'un dispositif selon l'invention, tel que représenté sur la **figure 3B****,** la première chambre **3** peut également être équipée d'un obturateur d'entrée **33,** permettant d'assurer l'entrée d'un milieu gazeux dans ladite chambre **3.**

Dans les exemples illustrés, l'obturateur de sortie **32** et l'obturateur d'entrée **33** pour le gaz **III,** au niveau de la première chambre **3** sont aménagés dans le fond **21** du moule **20** et de part et d'autre de la protubérance **23.** Mais, leur positionnement n'a aucune influence, puisqu'un équilibre s'établit au sein de la première chambre **3.** Ainsi, ils peuvent être positionnés du même côté de la protubérance **23.** De même, l'un et/ou l'autre peut être aménagé, non pas sur le fond **21,** mais sur la paroi périphérique **25** du moule **20.**

Les obturateurs d'entrée et de sortie vont permettre de moduler les déplacements des première et deuxième membranes **1** et **2,** et jouer sur le volume et/ou la pression des première et deuxième chambres **3** et **4.**

La première membrane **1** permet de contrôler le positionnement du matériau composite **I** au départ et participe au maintien de son positionnement lors de son déplacement gravitaire et, influence le degré d'avancement du formage. Lorsque la pression inter-membranaire **P2** sera suffisamment faible, une fois le volume minimal **V1** de la première chambre **3** atteint, la première membrane **1** va contribuer au compactage du matériau composite **I**. La deuxième membrane **2** participe au guidage du matériau composite **I** et à son maintien en place, tout au long du procédé de formage, et joue sur le formage et le contrôle de son avancement. Lorsque la pression inter-membranaire **P2** sera suffisamment faible, une fois le volume **V1** de la première chambre **3** atteint, la membrane supérieure **2** va elle-aussi contribuer au compactage du matériau composite **I**.

Il convient de remarquer que l'ajout et le retrait de gaz dans les première et seconde chambres **1** et **2** peuvent conduire à des variations du volume desdites chambres ou à des variations de pression. Ces modifications vont avoir une influence sur la pression et donc sur les forces et contraintes mécaniques appliquées sur les membranes et sur le matériau composite, et donc sur les propriétés finales du matériau composite préformé obtenu. Il faut souligner que la pression au sein d'une chambre va diminuer de manière prépondérante par rapport au volume, si le volume de l'espace contenu dans cette chambre est difficilement réductible (contact entre matériaux déformés, contact entre matériaux déformés et matériaux rigides, réaction en tension avec de faibles élongations des matériaux déformés). Par contre, le volume d'une chambre évolue de manière prépondérante par rapport à la pression, si un ou des espaces compressibles existent sous une membrane ou que les réactions en tension des matériaux sont soit faibles, soit avec un grand potentiel d'élongation.

Dans le dispositif selon l'invention, l'obturateur d'entrée de gaz **31** dans la deuxième chambre **4,** s'il entraine une augmentation de la pression **P2,** va permettre de libérer mécaniquement les fibres et/ou plis du matériau composite **I,** s'il entraine une augmentation du volume **V2,** il va également permettre de donner un certain degré de liberté au matériau composite **I** et aux membranes **1** et **2** et de jouer sur les interactions de contact (et notamment réduire les frottements) entre les différents éléments.

L'obturateur de sortie de gaz **30** depuis la deuxième chambre **4,** s'il entraine une diminution de la pression **P2,** va permettre de contraindre mécaniquement le matériau composite **I** (selon le fonctionnement classique en double membrane), s'il entraine une diminution du volume **V2,** il va permettre de contribuer au formage du matériau composite **I**.

Au niveau de la première chambre **3,** l'obturateur de sortie de gaz **32** depuis la première chambre **3,** a, pour fonction principale de réduire le volume **V1** de la première chambre **3,** ce qui permet d'avancer dans le processus de formage, jusqu'au plaquage final sur la surface de formage **22.**

L'obturateur d'entrée de gaz **33** dans la première chambre **3,** sera essentiellement utilisé pour diminuer la pression et relâcher la membrane inférieure **1,** et ainsi diminuer les frottements, notamment lors du refroidissement.

La **figure 9****,** quant à elle, illustre le cas d'un dispositif selon l'invention qui comprend un circuit externe **34** pour la circulation de gaz **III** de la première chambre **3** vers la seconde chambre **4.** En particulier, ce circuit relie l'obturateur de sortie **32** de la première chambre **3** à l'obturateur d'entrée **31** de la seconde chambre **4.** Ceci a l'avantage de réinjecter dans la seconde chambre **4,** le gaz aspiré de la première chambre **3,** et ainsi maintenir le volume global des deux chambres sensiblement constant, lors de certaines phases du procédé, dans la phase de formage intermédiaire, comme cela va être expliqué.

De manière classique, les obturateurs sont reliés à un circuit équipé d'un régulateur de circulation et de la pression en gaz, et notamment de l'air, (non représenté) permettant d'obtenir une aspiration ou une injection de milieu gazeux, en fonction de la nature de l'obturateur (de sortie ou d'entrée) dans la chambre concernée. Les circuits pourront donc inclure une pompe d'injection de gaz ou de réduction de la pression de gaz connecté à l'obturateur concerné, ou tout autre dispositif adapté pour permettre l'injection ou l'aspiration lorsque l'obturateur concerné est en position ouverte.

Les dispositifs conformes à l'invention sont adaptés pour mettre en forme (ou préformer) un matériau composite se présentant sous la forme d'une plaque, selon les procédés conformes à l'invention.

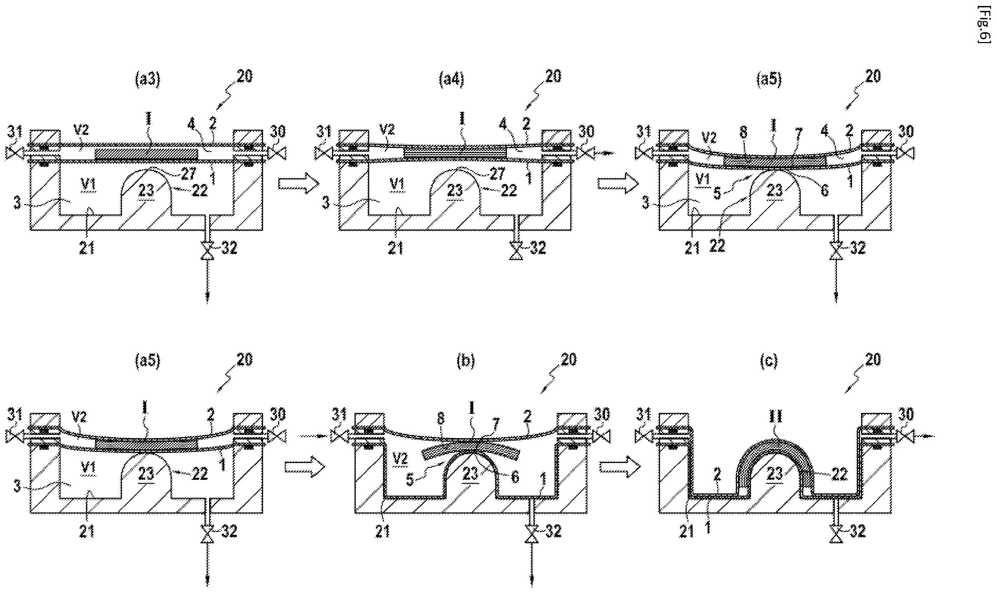

Un procédé selon l'invention, dont des étapes de certaines variantes sont présentées sur les **figures 6**à **8****,** comprend tout d'abord une phase d'agencement **(a)** qui comprend les opérations suivantes (les étapes **(a1)** et **(a2)** n'étant pas représentées) :
**(a1)** disposer d'un moule **20** dont le fond non plan définit une surface de formage **22** correspondant à la forme à donner au matériau composite **I** à préformer,
**(a2)** disposer, au-dessus du fond du moule **21,** une première membrane, nommée membrane inférieure **1,** sur laquelle est déposé le matériau composite **I** à préformer, et une seconde membrane s'étendant au-dessus du matériau composite **I,** nommée membrane supérieure **2,** lesdites deux membranes **1** et **2** pouvant subir des déformations élastiques et étant imperméables aux gaz **III,** et ledit matériau composite **I** étant placé au-dessus de la surface de formage **22,**
(a3) agencer les deux membranes **1** et **2** avec le moule **20,** de manière à former :
   - une première chambre **3** étanche entre le moule **20** et la membrane inférieure **1,** ladite première chambre **3** définissant un premier volume **V1** modulable, et
   - une seconde chambre **4** étanche entre les deux membranes **1** et **2,** ladite seconde chambre **4** définissant un second volume **V2** modulable, nommé volume inter-membranaire, le matériau composite **I** étant logé dans ce volume **V2.**

En général, à l'étape **(a2),** la membrane supérieure **1** sera tout d'abord placée au-dessus du moule **20,** puis le matériau composite **I** sera disposé à la position souhaitée, par rapport à la surface de formage **22,** notamment grâce à l'utilisation de repères, puis la membrane supérieure **2** sera, enfin, positionnée. Il peut également être prévu d'agencer préalablement les deux membranes **1** et **2** pour former la deuxième chambre **4** dans laquelle le matériau composite est positionné et de venir placer l'ensemble sur le moule **20** pour former, ensuite, la première chambre **3** et maintenir le tout ensemble, selon tout système de maintien ou serrage adapté. Bien entendu, avant son placement sur la première membrane 1, le matériau composite **I** devra être aux dimensions souhaitées, ce qui pourra nécessiter un découpage préalable.

A l'issue de la phase **(a3),** un dispositif dans lequel un matériau composite est positionné, tel que représenté sur la **figure 3A ou 3B****,** est obtenu. Dans les exemples illustrés, à l'issue de l'étape **(a3),** il n'y a pas de contact entre la membrane supérieure **2** et le matériau composite **I,** ni entre la membrane inférieure **1** et la surface de formage **22,** mais un contact à l'un ou l'autre de ces endroits pourrait être présent dès le départ, du fait du positionnement initial des différents éléments et des dimensions du dispositif.

Dans le procédé selon l'invention, de manière à favoriser la descente gravitaire du matériau composite **I,** tout en évitant son glissement sur la membrane inférieure **1,** notamment lors des étapes **(a2)** et **(a3)** de la phase d'agencement, la membrane inférieure **1,** voire les deux membranes **1** et **2,** est(sont) disposée(s) horizontalement, à la fin de l'étape **(a3),** voire lors des étapes **(a2)** et **(a3).**

Dans le cadre de l'invention, comme c'est également le cas dans les procédés de l'art antérieur, dits double membrane, cette phase d'agencement **(a)** est complétée par les opérations suivantes :
**(a4)** aspirer du gaz **III** contenu dans la seconde chambre **4,** et ainsi réduire le volume inter-membranaire **V2,** de manière à ce que les deux membranes **1** et **2** soient toutes deux au contact du matériau composite **I,**
**(a5)** réaliser un accostage local de la membrane inférieure **1** sur la surface de formage **22,** en une zone de contact **5** au moins, le matériau composite **I** et les deux membranes **1** et **2** étant également en contact, au niveau de ladite zone de contact **5.**

Cet accostage peut correspondre à une opération distincte et être obtenu en aspirant du gaz contenu dans la première chambre **3,** ce qui entraine une diminution du volume **V1** et un abaissement de la membrane inférieure **1** qui entraine avec elle le matériau de renfort et la membrane supérieure **2,** comptetenu de l'opération **(a4)** qui aura été réalisée au préalable, selon les étapes successives **(a3)** à **(a5)** présentées sur la **figure 6****.** Aussi, selon un mode de réalisation préféré, l'opération **(a5)** est réalisée après l'opération **(a4)** par aspiration de gaz **III** dans la première chambre **3,** conduisant à la réduction du volume **V1,** de manière à établir un pré-contact entre la membrane inférieure **1** et la surface de formage **22,** alors que le volume **V2** de la seconde chambre **4** est maintenu constant. L'aspiration de gaz depuis la seconde chambre **4** se fait par ouverture de l'obturateur de sortie **30,** alors que l'aspiration de gaz depuis la première chambre **3** se fait par ouverture de l'obturateur de sortie **32.** Une fois le matériau composite **I** comprimé entre les deux membranes, l'obturateur de sortie **30** peut être refermé ou maintenu ouvert si le niveau de pression souhaitée n'a pas été atteint, lors de la diminution du volume **V1,** si cette diminution est nécessaire pour l'accostage local.

Il est également possible que la membrane inférieure **1** soit, dès le départ, au contact de la surface de formage **22.** Un accostage initial peut être obtenu à l'issue de l'opération **(a3)** et conservé à l'issue de l'opération **(a4).** Il est également possible que même si après l'opération **(a3),** la membrane **1** est en butée sur la surface de formage **22,** celle-ci puisse légèrement se décoller de la surface de formage, lors de l'opération **(a4),** dans ce cas, une étape postérieure d'accostage **(a5)** sera, alors, nécessaire.

Quel que soit le mode de mise en œuvre, l'accostage correspond à un pré-contact, entre la membrane inférieure **1** qui va être placée en butée sur la partie la plus haute de la surface de formage **22.** Il s'agit d'un contact local et non d'un plaquage sur toute la surface de formage, contrairement à ce qui va être réalisé à la fin de la phase de formage intermédiaire. S'il existe plusieurs embossages au niveau de la surface de formage **22,** il est possible que l'accostage soit présent sur plusieurs zones de contact **5.**

A l'issue de l'étape **(a5),** la pression **P2** de la seconde chambre **4** est inférieure à la pression **P1** de la première chambre **3,** elle-même inférieure à la pression extérieure **Pext,** et en particulier à la pression atmosphérique, lorsque la pression extérieure **Pext** est égale à la pression atmosphérique.

L'opération **(a4),** quant à elle, consiste à réduire le volume **V2** de la chambre inter-membranaire, notamment à son volume minimal, de manière à venir tenir le matériau composite serré entre les deux membranes **1** et **2.** Ainsi à l'issue de l'opération **(a4)** et donc de la phase **(a),** le matériau composite **I** est compressé entre les deux membranes **1** et **2,** avec une surface de contact maximale avec ces dernières.

A la fin de l'étape **(a),** un contact est établi entre la membrane inférieure **1** et la partie la plus haute **27** de la surface de formage **22,** au niveau d'une zone de contact **5.** Mais au niveau de cette zone de contact **5,** c'est l'ensemble membrane inférieure **1**/matériau composite **I**/membrane supérieure **2** qui est positionné au contact de la partie la plus haute **27** de la surface de formage **22,** du fait de l'étape **(a4).**

L'étape **(a4)** peut conduire à une pression **P2** plus ou moins réduite dans la chambre inter-membranaire **4.** A l'issue de l'étape **(a4)** et à l'issue de l'étape **(a5),** et donc à la fin de la phase d'agencement **(a),** le matériau composite **I** est fermement maintenu entre les deux membranes **1** et **2,** ce qui permet d'assurer un bon positionnement sur la surface de formage **22.** Néanmoins, à l'issue de l'étape **(a4)** et à l'issue de l'étape **(a5),** et donc à la fin de la phase d'agencement **(a),** il est préférable que la pression **P2** au sein de la chambre inter-membranaire **4** soit intermédiaire, pour ne pas trop contraindre le matériau composite. En particulier, la pression **P2** sera de préférence de 600 à 950 mbar, si la pression extérieure est égale à la pression atmosphérique. Une telle pression permet notamment de limiter les contraintes mécaniques au sein du matériau composite **I,** et notamment au niveau des inter-plis dans les cas les plus fréquents où le matériau composite est un empilement de plusieurs plis de renfort. Cependant, une pression **P2,** dans la gamme allant de 2 à 1000 mbar, pourra également être prévue, si la pression extérieure est égale à la pression atmosphérique.

A l'issue de la phase d'agencement **(a),** le dispositif de formage est donc constitué et le matériau est en place dans ce dernier, et la mise en forme va alors pouvoir être initiée. L'ensemble dispositif de formage/matériau composite I peut être placé dans l'atmosphère ambiante, de sorte que la pression extérieure au dispositif, nommée **Pext,** est égale à la pression atmosphérique (soit 1,013 bar). Il est également possible que l'ensemble dispositif de formage/matériau composite **I** soit placé dans une enceinte dont la pression va pouvoir être modulée, tel qu'un autoclave. Les pressions données dans la suite de la description sont particulièrement adaptées au cas où l'ensemble dispositif de formage/matériau composite **I** est placé sous pression atmosphérique, mais ces dernières pourront être aisément ajustées par l'homme du métier, si nécessaire, en fonction de la pression extérieure.

Après la phase d'agencement **(a),** le procédé selon l'invention comprend une phase de formage intermédiaire **(b),** lors de laquelle au moins les opérations suivantes sont effectuées :
- introduire du gaz **III** dans la seconde chambre **4,** tout en maintenant la pression **P2** en dessous de la pression extérieure **Pext,** et en particulier de la pression atmosphérique, lorsque la pression extérieure **Pext** est égale à la pression atmosphérique et, ainsi tenir localement à distance la membrane supérieure **2** de la membrane inférieure **1** et du matériau composite **I,** tout en gardant, au niveau de la zone de contact **5,** à la fois l'accostage et le contact entre le matériau composite I et les deux membranes **1** et **2,**
- aspirer du gaz **III** contenu dans la première chambre **3,** de manière à plaquer la membrane inférieure **1** sur toute la surface de formage **22** présente au fond **21** du moule **20.**

Dans le cadre de l'invention, le contrôle de la pression et l'introduction de gaz dans la seconde chambre **4** qui permet une augmentation du volume de la chambre **4** permet de donner un certain degré de liberté au matériau composite et aux membranes et de libérer mécaniquement les fibres, voire les plis qui composent le matériau composite. Il est, ainsi, possible de réduire les défauts sur le matériau en forme final, par comparaison à un procédé double membrane de l'art antérieur.

Cependant, le maintien du contact de l'ensemble première membrane **1**/matériau composite I/deuxième membrane **2** au moins sur la zone de contact **5,** permet de contrôler le positionnement du matériau composite et ainsi garantir l'obtention de la forme souhaitée, comme dans le cas d'un procédé double membrane de l'art antérieur. Tout au long du procédé, et notamment, tout au long de la phase intermédiaire de formage **(b),** les deux membranes **1** et **2** sont maintenues en contact avec le matériau composite **I,** au niveau de la zone de contact **5** au moins, avec l'ensemble membranes/matériau composite qui est en appui sur la surface de formage **22.** Au niveau de la zone la plus haute de la surface de formage, à la fois l'accostage et le contact entre le matériau composite **I** et les deux membranes **1** et **2,** sont maintenus, ce qui sécurise le positionnement du matériau sur le moule et sur la surface de formage et évite qu'un décalage ne se produise, du fait du poids du matériau composite **I**.

En général, le(s) introduction(s) et retraits de gaz **III** sont réalisés, de manière à ce que la pression **P1** dans la première chambre **3** et la pression **P2** dans la seconde chambre **4** soient contrôlées et/ou modifiées, et que la pression **P1** reste inférieure à la pression **P2,** elle-même inférieure à la pression extérieure **Pext,** et en particulier à la pression atmosphérique, lorsque la pression extérieure **Pext** est égale à la pression atmosphérique.

De manière à faciliter le formage intermédiaire et/ou en fonction de la matière plastique polymérique présente dans le matériau composite **I,** tout au long de la phase de formage intermédiaire, voire également lors de l'opération d'accostage local **(a5)** si une telle opération est nécessaire postérieurement à l'opération **(a4),** un chauffage du matériau composite I peut être assuré, de manière à obtenir le ramollissement de la matière polymérique plastique. Un tel chauffage peut être réalisé en plaçant le moule dans une enceinte équipée de moyens de chauffage et le plus souvent d'un thermostat pour réguler la température, telle qu'une étuve, ou en plaçant le matériau composite **I** sous une ou plusieurs lampes à infrarouges. Le chauffage peut également intervenir en amont, lors de la phase d'agencement, en particulier lorsque matériau composite **I** et les cadres ont été mis en place.

Lorsqu'un chauffage est mis en œuvre, il va avoir une influence sur le volume de gaz et/ou la pression du gaz dans les chambres, voire également sur le volume occupé par le matériau composite. En général, la température de chauffage finale sera atteinte progressivement et le volume de la première chambre, voire de la seconde chambre, sera régulé lors de cette montée en température et ce jusqu'à obtention de la température finale souhaitée, pour éviter l'augmentation du volume de la chambre concerné. Aussi, lors de la montée en température à la température de chauffage souhaitée, l'obturateur de sortie **32** pourra être actionné et du gaz éliminé de la première chambre **3** pour contrôler le volume **V1** et éviter son augmentation, en le maintenant sensiblement constant. De même, l'obturateur de sortie **30** pourra être actionné et du gaz éliminé de la chambre inter-membranaire **4** pour contrôler le volume **V2** et éviter son augmentation, en le maintenant sensiblement constant.

Selon un mode de mise en œuvre de l'invention illustré sur la **figure 6****,** l'introduction de gaz **III** dans la seconde chambre **4,** maintenant localement à distance la membrane supérieure **2** et la membrane inférieure **1,** et l'aspiration de gaz **III** contenu dans la première chambre **3,** entrainant le plaquage de la membrane inférieure **1** sur le fond du moule **21** peuvent être réalisées simultanément. Dans ce cas, la phase de formage intermédiaire est réalisée en aspirant du gaz **III** contenu dans la première chambre **3,** de manière à plaquer la membrane inférieure **1** sur la surface de formage **22** aménagée au fond **21** du moule, tout en introduisant du gaz **III** dans la seconde chambre **4** et en maintenant la pression **P2** dans la seconde chambre **4** en dessous de la pression extérieure **Pext,** et en particulier de la pression atmosphérique, lorsque la pression extérieure **Pext** est égale à la pression atmosphérique et, ainsi, augmenter le volume inter-membranaire **V2,** et tenir localement à distance la membrane supérieure **2** de la membrane inférieure **1** et du matériau composite **I,** tout en gardant, au niveau de la zone de contact **5,** à la fois l'accostage et le contact entre le matériau composite **I** et les deux membranes **1** et **2.** De fait, sous l'effet de la gravité, le matériau composite **I** se déforme selon ses propriétés en flexion et selon la géométrie et la surface de la zone de contact **5.** Des lors, une séparation entre la membrane supérieure **2** et le matériau composite **I** intervient, les extrémités du matériau composite **I** venant s'écarter de la membrane supérieure **2,** comme illustré sur la **figure 6****.** En maintenant ainsi simultanément en position ouverte l'obturateur d'entrée **31** au niveau de la chambre inter-membranaire **4** et l'obturateur de sortie **32** au niveau de la première chambre **3,** il est possible de laisser un certain degré de liberté au matériau composite **I,** avant son plaquage sur la membrane inférieure **1** et donc sur la surface de formage, lors de l'étape finale de formage et de compactage. Par ailleurs, une fois la phase (b) initiée, la pression **P2** sera, le plus souvent, maintenue sensiblement constante au cours de cette phase de préformage **(b)** pour éviter le déplacement de la membrane supérieure **2.**

D'une manière générale, dans les procédés selon l'invention, les débits d'injection ou d'aspiration de gaz dans les chambres seront ajustés par l'homme du métier, en fonction de différents paramètres, notamment les obturateurs sélectionnés, du diamètre des tuyaux constituant le circuit de circulation de gaz, de la taille du moule, des éventuelles pertes de charge du circuit ...

Au cours de la phase de préformage **(b)** et donc également à la fin de cette phase, la pression **P1** de la première chambre **3** est inférieure à la pression **P2** de la seconde chambre **4.** A la fin de la phase de préformage **(b),** la pression **P1** de préformage **(b)** est, généralement, comprise dans la gamme allant de 2 à 50 mbar.

Dans ce mode de mise en œuvre, la diminution du volume **V1** de la première chambre **3** peut être égale ou sensiblement égale à l'augmentation du volume **V2** de la seconde chambre **4.** Comme illustré en **figure 6****,** il est également possible que l'augmentation du volume **V2** de la seconde chambre **4** soit inférieure, notamment de 5 à 10%, par rapport à la diminution du volume **V1** de la première chambre **3,** ce qui conduira à un déplacement vers le fond du moule, plus ou moins marqué de la membrane supérieure **2,** bien qu'elle reste maintenue à distance sur certaines zones de la surface de formage.

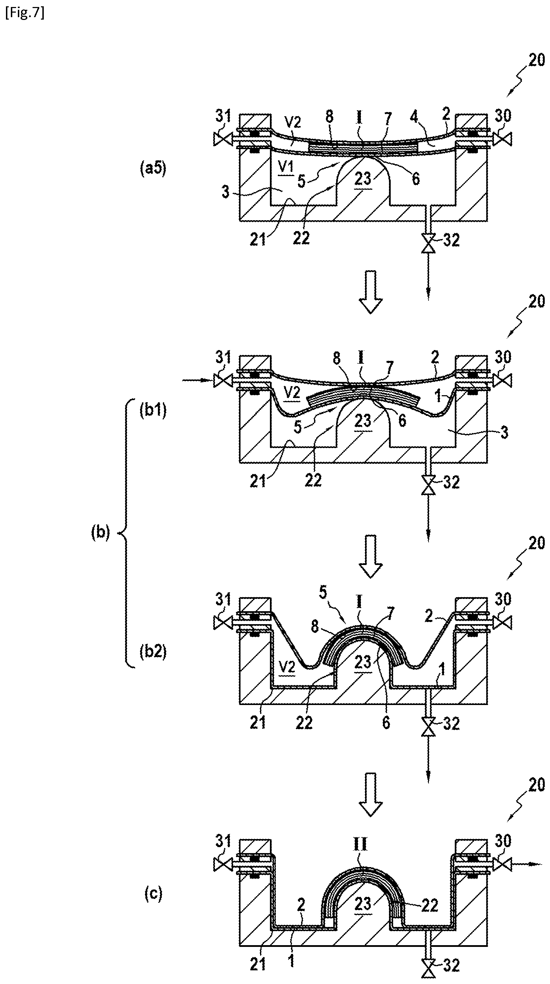

Selon une deuxième variante de réalisation illustrée sur la **figure 7****,** la phase de formage intermédiaire **(b)** comprend, voire comprend uniquement, les opérations successives suivantes :
**(b1)** aspirer du gaz **III** contenu dans la première chambre **3,** conduisant à la réduction du volume **V1,** et à l'abaissement de la membrane inférieure **1,** en une position intermédiaire, tout en introduisant du gaz **III** dans la seconde chambre **4** et en maintenant la pression **P2** dans la seconde chambre **4** en dessous de la pression extérieure **Pext,** et en particulier de la pression atmosphérique, lorsque la pression extérieure **Pext** est égale à la pression atmosphérique et, ainsi, augmenter le volume inter-membranaire **V2,** et tenir localement à distance la membrane supérieure **2** de la membrane inférieure **1** et du matériau composite **I,** tout en gardant, au niveau de la zone de contact **5,** à la fois l'accostage et le contact entre le matériau composite **I** et les deux membranes **1** et **2,**
**(b2)** aspirer du gaz **III** contenu dans la première chambre **3,** et ainsi plaquer la membrane inférieure **1** sur toute la surface de formage **22** présente au fond **21** du moule **20,** tout en maintenant constant le volume inter-membranaire **V2.**

Là encore, à l'étape **(b1),** la baisse du volume **V1** de la première chambre **3** peut être égale ou sensiblement égale à l'augmentation du volume **V2** de la seconde chambre **4,** comme illustré sur la **figure 7****.** Il est également possible que l'augmentation du volume **V2** de la seconde chambre **4** soit inférieure, notamment de 5 à 10%, par rapport à la diminution du volume **V1** de la première chambre **3,** ce qui conduira à un déplacement vers le fond du moule, plus ou moins marqué de la membrane supérieure **2,** bien que maintenue à distance sur certaines zones de la surface de formage. Le déplacement de la membrane supérieure **2** dépendra également de l'équilibre des pressions entre les chambres **3** et **4.** L'étape **(b1)** est réalisée en maintenant simultanément en position ouverte l'obturateur d'entrée **31** au niveau de la chambre inter-membranaire **4** et l'obturateur de sortie **32** au niveau de la première chambre **3,** et l'obturateur d'entrée **31** sera fermé et l'obturateur de sortie **32** maintenu ouvert pour obtenir le plaquage de la membrane inférieure **1** sur la surface de formage, lors de l'étape **(b2).**

Ainsi, dans le cas du procédé illustré sur la **figure 7****,** la membrane supérieure **2** se déplace, en fonction du déplacement de la membrane inférieure **1** (qui a pris de l'avance par le passage de l'étape **(a5)** à l'étape **(b1)**)**.** Dans ce cas, la membrane supérieure **2** se déforme et se tend de plus en plus au cours de l'avancement de la phase **(b),** et en particulier de l'étape **(b2),** ce qui a pour conséquence de modifier la pression **P2** de la seconde chambre **4.** De manière avantageuse, le volume **V2** est maintenu sensiblement constant, voire constant, tout au long de la phase (b).

Lors de l'étape **(b1),** les pressions dans les chambres vont, notamment, dépendre des propriétés mécaniques des membranes. Lors de l'étape **(b2),** lorsque la membrane inférieure **1** est au contact de la surface de formage **22,** la pression **P1** dans la première chambre **3** pourra notamment être de 2 à 50 mbar. Lors de l'étape **(c),** lorsque la membrane supérieure **2** est au contact du matériau composite **I,** lui-même plaqué sur la membrane inférieure **1,** elle-même plaquée sur la surface de formage **22,** la pression **P2** dans la deuxième chambre **4** pourra notamment être de 2 à 50 mbar.

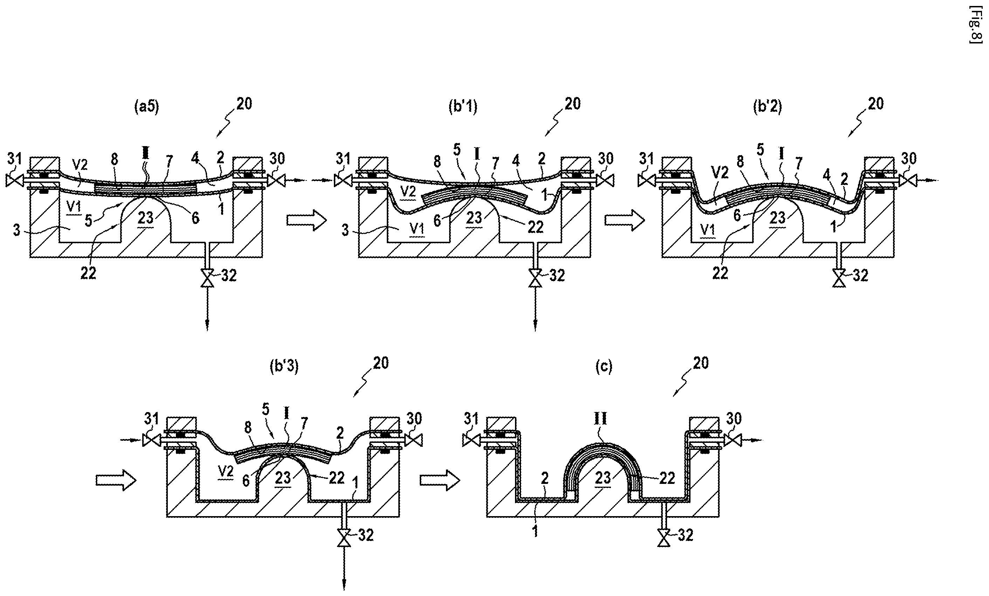

Selon une troisième variante de réalisation illustrée **figure 8****,** la phase de formage intermédiaire **(b),** comprend, voire comprend uniquement, les opérations successives suivantes :
**(b'1)** aspirer du gaz **III** contenu dans la première chambre **3,** conduisant à la réduction du premier volume **V1,** et à l'abaissement de la membrane inférieure **1,** en une position intermédiaire, tout en introduisant du gaz **III** dans la seconde chambre **4** et en maintenant la pression **P2** dans la seconde chambre **4** en dessous de la pression extérieure **Pext,** et en particulier de la pression atmosphérique, lorsque la pression extérieure **Pext** est égale à la pression atmosphérique et, ainsi, augmenter le volume inter-membranaire **V2,** et tenir localement à distance la membrane supérieure **2** de la membrane inférieure **1** et du matériau composite **I,** tout en gardant, au niveau de la zone de contact **5,** à la fois l'accostage et le contact entre le matériau composite **I** et les deux membranes **1** et **2,**
**(b'2)** aspirer du gaz **III** contenu dans la seconde chambre **4** et ainsi réduire le volume inter-membranaire **V2,** et conduire à l'abaissement de la membrane supérieure **2** et au placement des deux membranes **1** et **2** toutes deux au contact du matériau composite **I,**
**(b'3)** aspirer du gaz **III** contenu dans la première chambre **3,** et ainsi plaquer la membrane inférieure **1** sur toute la surface de formage **22** présente au fond **21** du moule **20,** tout en introduisant du gaz **III** dans la seconde chambre **4** et en maintenant la pression **P2** dans la seconde chambre **4** en dessous de la pression extérieure **Pext,** et en particulier de la pression atmosphérique, lorsque la pression extérieure **Pext** est égale à la pression atmosphérique et, ainsi, augmenter le volume inter-membranaire **V2,** et tenir localement à distance la membrane supérieure **2** de la membrane inférieure **1,** tout en gardant, au niveau de la zone de contact **5,** à la fois l'accostage et le contact entre le matériau composite **I** et les deux membranes **1** et **2.**

Là encore, à l'opération **(b'1)** et/ou à l'opération **(b'3),** la baisse du volume **V1** dans la première chambre **3** peut être égale ou sensiblement égale à l'augmentation du volume **V2** dans la seconde chambre **4,** comme illustré **figure 8****.** Il est également possible que l'augmentation du volume **V2** de la seconde chambre **4** soit inférieure, notamment de 5 à 10%, par rapport à la diminution du volume **V1** de la première chambre **3,** ce qui conduira à un déplacement vers le fond du moule, plus ou moins marqué de la membrane supérieure **2,** bien que maintenue à distance sur certaines zones de la surface de formage. Le déplacement de la membrane supérieure **2** dépendra également de l'équilibre des pressions entre les chambres **3** et **4.** L'étape **(b'1)** est réalisée en maintenant simultanément en position ouverte l'obturateur d'entrée **31** au niveau de la chambre inter-membranaire **4** et l'obturateur de sortie **32** au niveau de la première chambre **3.** Ensuite, lors de l'étape **(b'2),** ces deux obturateurs sont fermés et l'obturateur de sortie **30** au niveau de la seconde chambre 4 est ouvert, ce qui permet de descendre la membrane supérieure **2** sur le matériau composite **I.** Lors de l'étape **(b'3),** l'obturateur de sortie **30** est fermé et les obturateurs **31** et **32** sont de nouveau ouverts, comme dans l'étape **(b'1).**

Comme cela ressort de l'illustration présentée sur la **figure 8****,** entre les opérations **(b'2)** et **(b'3),** la membrane supérieure **2** ne se déplace pas, mais va ensuite descendre lors de l'étape **(b'3),** et éventuellement, en amont, selon une répétition des étapes **(b'1)** et **(b'2),** jusqu'à permettre la compression finale du matériau composite lors de la phase **(c).**

Il est possible de répéter, les opérations **(b'1)** à **(b'2),** par exemple une à dix fois, et ainsi abaisser graduellement la membrane inférieure **1,** puis la membrane supérieure **2,** jusqu'à obtenir le plaquage de la membrane inférieure **1** sur la surface de formage **22.** Selon la troisième variante de réalisation, la phase de formage intermédiaire **(b),** pourra comprendre uniquement une répétition d'opérations **(b'1)** à **(b'2),** suivie d'une opération finale **(b'3).** Le nombre de répétition sera fonction de la réduction du volume **V1** obtenu à l'issue de chaque étape **(b'1).** Lors des étapes **(b'1),** il y a un abaissement progressif de la première membrane **1,** à l'exception de sa partie déjà sur la zone de formage au niveau de la ou des zones de contact 5 et cette zone de contact s'étend progressivement. L'étape **(b'2)** impose à la membrane supérieure **2** et au matériau composite **I** de suivre le mouvement de la membrane inférieure **1,** même si la descente de la membrane inférieure **1** lors de l'étape **(b'1)** s'accompagne en général de l'abaissement du matériau de renfort, comme illustré **figure 8****.**

Dans cette troisième variante de réalisation illustrée notamment sur la **figure 8****,** en général, lors de l'étape **(b'1), P1** < **P2** < Patmo, avec notamment 50 mbar < **P1** < 950 mbar et 50 mbar < **P2** < Patmo, et lors de l'étape **(b'2),** 50 mbar < **P1** < 950 mbar et 50 mbar < **P2** < 950mbar. Lors de l'étape **(b'3),** les pressions dans les chambres pourront, notamment, être telles que 2 mbar < **P1** < 50 mbar et 50 mbar < **P2** < 950 mbar.

En général, dans les procédés selon l'invention, les deux membranes ne font que descendre tout au long du procédé. Il n'est, cependant, pas exclu que la membrane supérieure **2** puisse légèrement remonter, notamment lors de l'ajout de gaz dans l'espace inter-membranaire.

De même, dans les procédés selon l'invention, au niveau de la zone de contact **5,** un contact **6** est maintenu entre la membrane inférieure **1** et la zone de formage **22,** un contact **7** est maintenu entre la membrane inférieure **1** et le matériau composite **I** et un contact **8** est maintenu entre le matériau composite **I** et la membrane supérieure **2.** Au fur et à mesure du procédé, cette zone de contact entre les différents éléments va s'étendre, jusqu'à obtenir un plaquage complet de l'ensemble membrane inférieure **1**/matériau composite **I**/membrane supérieure **2,** sur toute la surface de formage **22,** voire plus.

A l'issue de la phase de formage intermédiaire **(b),** et ce quelle que soit la variante de mise en œuvre, la pression **P1** dans la première chambre **3** sera, avantageusement, dans la gamme allant de 2 à 50 mbar typiquement de 2 à 5 mbar.

Le procédé selon l'invention, et ce quelle que soit la phase de formage intermédiaire **(b)** adoptée, comprend, ensuite :
- une phase **(c)** de formage final et de compactage conduisant à la forme finale souhaitée pour le matériau composite préformé **II,** au cours de laquelle un chauffage est appliqué, lors de laquelle le gaz **III** contenu dans la seconde chambre **4** est retiré, de manière à venir plaquer à la fois le matériau composite **I** et la membrane supérieure **2** sur la membrane inférieure **1,** elle-même plaquée sur le fond du moule **21,** en particulier sur la surface de formage **22,** et obtenir une réduction de la pression **P2,** de manière à assurer le compactage,
- une phase **(d)** de refroidissement et de démoulage du matériau composite préformé **II.**

Au moment de la phase **(c),** l'obturateur de sortie **30** est activé pour aspirer le gaz **III** contenu dans la chambre inter-membranaire **4,** et ainsi atteindre le volume **V2** minimal. Une fois ce volume atteint, la pression **P2** est également réduite. Lors du formage final et lors du compactage, la pression **P2** au sein de la chambre inter-membranaire **4** est généralement dans la gamme allant de 2 à 50 mbar typiquement de 2 à 5 mbar. Une fois une telle pression atteinte, l'obturateur de sortie **30** pourra être fermé. Généralement, l'aspiration est maintenue pour sécuriser le fonctionnement.

En fonction des dimensions de la surface de formage **22** et du matériau intermédiaire **I,** lorsque le plaquage est obtenu dans la phase **(c),** l'ensemble membrane inférieure **1**/matériau composite **I**/membrane supérieure **2** ne pourra recouvrir que la surface de formage **22** ou une partie de cette dernière comme présenté sur la dernière étape des **figures 6** et **7** ou pourra également recouvrir une partie plane du fond du moule, voire la totalité du fond **21** du moule **20,** ce qui permet de réduire les risques de rupture des membranes.

Lors de l'étape **(c),** l'obturateur de sortie **32** de la première chambre **3** pourra être fermé ou maintenu en position ouverte. Lors du formage final et lors du compactage, la pression **P1** au sein de la première chambre **3** est généralement dans la gamme allant de 2 à 50 mbar, typiquement de 5 mbar.

Pour obtenir la consolidation de la pièce, le temps de maintien du chauffage sous pression réduite, lors de la phase **(c)** où le matériau composite est maintenu comprimé entre les deux membranes et adopte la forme finale souhaitée, est fonction de l'épaisseur du matériau composite et de la nature de la matière thermoplastique polymérique, notamment. En général, la phase **(c)** durera de 2 minutes à 5 heures. Ensuite, le refroidissement préalable au démoulage peut avoir lieu, de manière à figer la forme obtenue lors de la phase **(c).** Pour cela, le chauffage sera simplement arrêté et le retour à température ambiante se fera naturellement.

Quel que soit le procédé selon l'invention et notamment la phase de formage intermédiaire mise en œuvre, lors de la phase de refroidissement, la pression dans la première chambre **3** pourra être augmentée, par activation de l'obturateur d'entrée **33** au niveau de la première chambre **3,** avec utilisation d'un dispositif tel que celui présenté en **figure 3B****.** Une telle augmentation de la pression, notamment pour atteindre une valeur dans la gamme allant de 850 mbar à la pression atmosphérique, permet de réduire les frottements entre la membrane inférieure **1** et le moule **20.** Cette réduction des frottements permet ainsi de faciliter les glissements entre l'ensemble membranes / matériau composite et le moule, et encore réduire les risques de défauts. Ces glissements interviennent, du fait de différences de dilatation thermique entre le moule et l'ensemble membranes / matériau.

Après refroidissement et la forme obtenue ainsi figée, le matériau composite préformé **II** pourra être démoulé, après remise du dispositif à la pression extérieure, et en particulier à pression atmosphérique. Le dispositif est ensuite réutilisable, si la nature des membranes le permet.

La pression extérieure **Pext** est modulable. Si la pression extérieure **Pext** est modulée au cours du procédé, en particulier, si le dispositif est placé dans un autoclave, l'augmentation de la pression extérieure **Pext** pourra être réalisée avant la mise en œuvre de la phase **(b)** et/ou de la phase **(c).** Par contre, en général, la pression extérieure **Pext** est maintenue constante, tout au long de la phase **(b)** et tout au long de la phase **(c),** même si la pression extérieure est augmentée avant l'une ou l'autre de ces phases. A titre d'exemple, si le dispositif est placé dans un autoclave, la pression extérieure **Pext** pourra être augmentée pour atteindre une valeur appartenant à la gamme allant de 1 à 20 bars et maintenue à cette valeur lors des phases **(b)** et **(c),** voire également lors de la phase de refroidissement. Les pressions **P1** et **P2** précédemment données, à titre d'exemple, seront, alors, ajustées en conséquence.

Il ressort donc de la précédente description que les procédés et dispositifs selon l'invention offrent une grande modularité. Ils permettent à la fois de garantir le contrôle et le positionnement du matériau composite **I** à mouler, tout au long du procédé, et conduisent à un formage selon la forme souhaitée avec une absence de décalage. Mais, par ailleurs, la possibilité d'augmenter le volume de la chambre inter-membranaire **4** lors de la descente de la membrane inférieure **1,** pendant une ou plusieurs phases du préformage **(b),** permet de donner un certain degré de liberté aux fibres du matériau composite, voire aux plis le constituant si ce dernier correspond à un empilement, et éviter des plissures ou autres défauts occasionnés, si trop de contraintes mécaniques sont imposées au matériau composite **I** lors de sa mise en forme. L'invention offre donc de nombreuses voies possibles d'optimisation, en ajustant ces paramètres.

Par ailleurs, la mise en œuvre des procédés et dispositifs selon l'invention peut être entièrement automatisée, compte tenu de la fiabilité du placement du matériau composite **I,** grâce à l'utilisation des deux membranes **1** et **2** et au contrôle des différents paramètres du procédé qui peut être entièrement informatisé. En général, un cycle de formage mettant en œuvre un procédé selon l'invention sera de l'ordre de de 5 à 15 minutes, en l'absence de chauffage, et pourra atteindre 1 à 12 h, lorsque qu'un chauffage est utilisé. Le procédé selon l'invention pourra conduire à une pièce finale dans le cas de l'utilisation d'un matériau composite I préimprégné. Dans le cas où le matériau composite est dit « sec », le procédé selon l'invention conduira à une préforme qui sera ensuite associée à une matrice polymérique, pour obtenir la pièce finale souhaitée, par mise en œuvre d'un procédé direct bien connu de l'homme du métier.

Les exemples ci-après permettent d'illustrer l'invention, mais n'ont aucun caractère limitatif.

### Exemples

Dans les exemples, des empilements de matériaux composites, chacun constitué d'une nappe unidirectionnelle de fibres de carbone IMA 12K commercialisée par la société Hexcel Corporation, associée sur chacune de ses faces à un voile de fibres de copolyamide 1R8 de 4g/m2 de la société Protechnic, ont été utilisés. Le voile polymérique a été associé à la nappe unidirectionnelle de carbone conformément à la demande WO 2010/046609.

Les essais comparatifs 1a, 1b et 1c, ainsi que les exemples 1 et 2 sont réalisés avec 16 plis superposés d'un tel matériau, qui sont solidarisés entre eux par dépose automatique AFP avec chauffage pour former un empilement **I,** se présentant sous la forme d'une plaque de dimensions 750 mm * 450 mm * 3,1 mm. Le % massique de matière plastique (le copolyamide) dans l'empilement final **I** était de 3,6 %, par rapport à la masse de l'empilement.

Dans tous les cas, qu'une ou plusieurs membranes aient été utilisées, il s'agissait de membranes Ipplon DP1000 en nylon, de 75 µm d'épaisseur, distribuées par la société Airtech, Grande-Bretagne.

La température utilisée lors des opérations de formage intermédiaire et de formage final et compactage était de 170°C et la température de démoulage de 25°C. La montée en température jusqu'à 170°C a étéréalisée à une vitesse de 1,5 ° C/min et a pris 6 heures.

Le moule **20** utilisé se présentait sous la forme d'une cuve de dimensions 2000 mm * 1000 mm * 320 mm. Au fond **21** du moule, en son milieu et s'étendant parallèlement à son grand côté, se trouvait une protubérance **23,** correspondant à la surface de formage **22.** La forme et les dimensions de cette protubérance sont données sur la **figure 10****.** L'étanchéité entre le moule **20** et la membrane et, lorsque deux membranes **1** et **2** ont été utilisées, entre les deux membranes **1** et **2** pour former un espace-inter-membranaire fermé (nommé deuxième chambre **4**), était assurée par l'utilisation de deux joints d'étanchéité **16** et par une superposition de cadres **11** et **12** et de systèmes de serrage **17a** et **17b,** comme présenté sur les **figures 4** et **5****.** Dans le cas de l'utilisation d'une membrane unique, seul un joint **16** d'étanchéité s'étendant tout le long du bord périphérique **26** du moule **20** a été utilisé, celui-ci étant positionné entre le bord du moule et la membrane. Un cadre équivalent au cadre **11** de la **figure 5** a alors été positionné et serré sur la membrane.

Dans les exemples comparatifs et selon l'invention, le dispositif de formage se trouvait dans l'atmosphère ambiante, de sorte que la pression extérieure au dispositif de formage était égale à la pression atmosphérique, à savoir 1,013 bar, soit 1013 hPa.

Les analyses de surface pour mettre en évidence ou non la présence de défauts ont été réalisées grâce à un Scanner 3D utilisant la technologie Créaform.

### Exemple comparatif 1a

Cet exemple comparatif a été mené en utilisant la technique antérieure simple membrane et donc en utilisant un dispositif tel que décrit sur la **figure 1****.** L'empilement a été positionné directement au sommet de la protubérance présente au fond du moule. Il a été positionné symétriquement par rapport à la protubérance, de manière à ce que le sommet de la protubérance formant une ligne s'étende parallèlement à ses deux grands côtés et au milieu de ces derniers. Néanmoins, il a été difficile de maintenir l'empilement en équilibre. La membrane a alors été positionnée au-dessus pour venir maintenir l'empilement en appui sur le sommet de la protubérance.

Une montée en température à 170 ° C a alors été réalsée, suivie de l'aspiration de l'air contenu entre le moule et la membrane. L'opération de compactage a été réalisée en maintenant une pression de 5 mbar et une température de 170 ° C, pendant 30 minutes. Ensuite, le chauffage a été arrêté et une fois la température revenue à température ambiante, l'empilement en forme obtenu a été démoulé.

La surface totale (c'est-à-dire les faces interne et externe) de la préforme obtenue, correspondant à 284750 mm2, a été analysée et a fait apparaitre une absence totale de défaut.

### Exemple comparatif 1b

Cet exemple comparatif a été réalisé en utilisant la technique antérieure double membrane et donc en utilisant un dispositif tel que décrit sur la **figure 2****.** Contrairement à l'exemple comparatif 1a, une membrane inférieure **1** a alors été positionnée au-dessus du moule **20,** de manière à venir fermer celui-ci et former une première chambre **3.** Elle a été disposée à une distance de 2 cm du sommet de la protubérance présente au fond du moule. L'empilement **I** a été positionné directement sur cette membrane inférieure **1,** au-dessus du sommet de la protubérance, entrainant une mise en contact de la membrane inférieure **1** sur le sommet de la protubérance présente au fond du moule. Il a été positionné symétriquement par rapport à la protubérance **23,** de manière à ce que le sommet de la protubérance formant une ligne s'étende parallèlement à ses deux grands côtés et au milieu de ces derniers. Son maintien était donc assuré par la membrane inférieure **1.** Une membrane supérieure **2** a alors été positionnée au-dessus pour venir emprisonner l'empilement **I** entre les deux membranes formant une seconde chambre **4,** l'espace entre les membranes **1** et **2** étant de 40 mm. L'ensemble du dispositif a, ensuite, été verrouillé grâce aux systèmes de serrage **17a et 17b** présentés sur les **figures 4** et **5****.** Le procédé s'est alors déroulé de la façon suivante : chauffage jusqu'à une température de 170°C, maintenue jusqu'à la fin de l'étape de compactage, aspiration de l'air contenu dans la chambre inter-membranaire **4** grâce à la vanne de sortie **30** connectée à l'espace inter-membranaire, jusqu'à l'obtention d'une pression de 5mbar dans la chambre inter-membranaire **4** : le positionnement de l'empilement était ainsi sécurisé et décollé de la protubérance **23.** Cette vanne **30** a ensuite été maintenue ouverte pour maintenir la régulation de la pression.

L'aspiration de l'air contenu entre le moule et la membrane inférieure **1** jusqu'à l'obtention d'une pression de 5 mbar a alors été réalisée par l'intermédiaire de la vanne de sortie **32** reliée à la première chambre **3,** avec un débit d'aspiration de 7,5 m3/h. Ainsi, l'ensemble membranes/empilement venait épouser la forme de la protubérance **23.** La phase de formage final et de compactage a alors été menée en maintenant cette pression de 5 mbar et une température de 170 ° C, pendant 30 minutes. Ensuite, le chauffage a été arrêté et une fois la température revenue à température ambiante, l'empilement en forme **II** a été démoulé.

Les volumes et pressions dans les deux chambres **3** et **4,** lors des différentes phases du procédé sont résumés dans le Tableau 2 ci-dessous.

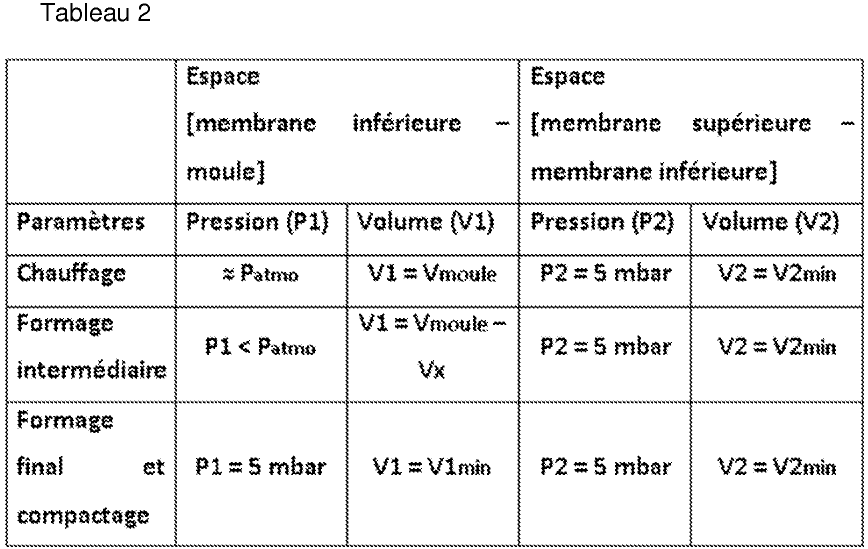

Dans les Tableaux des exemples, Pₐₜₘₒ = pression atmosphérique, Vₘₒᵤₗₑ = volume d'air dans l'espace entre la membrane inférieure et le moule au début du procédé, Vx = volume d'avancement associé à la première chambre (située entre le moule et la membrane inférieure), V1ₘᵢₙ = Volume V1 minimum, V2ₘᵢₙ = Volume V2 minimum.

La surface totale (c'est-à-dire les faces externe et interne 101 et 102) de la préforme obtenue, correspondant à 285943 mm2, a été analysée et a fait apparaitre des défauts, à la fois sur les surfaces interne et externe de la préforme **II** correspondant à une surface de 32812 mm2, soit 11,5 % de la surface. La **figure 11** met en évidence les plissures **200** présentes sur la face externe **102** de la préforme **II.**

### Exemple comparatif 1c

Cet exemple comparatif est comparable à l'exemple comparatif 1b, à la différence que, tout d'abord, une aspiration de l'air dans l'espace inter-membranaire a été réalisée pour atteindre une pression de 850mbar et non de 5mbar. Cette modification était donc conforme aux préconisations du brevet US 9,259,859 et avait pour but de limiter le compactage de l'empilement lors de la mise en forme intermédiaire et ainsi de faciliter le glissement des plis les uns par rapport aux autres.

Les volumes et pressions dans les deux chambres 3 et **4,** lors des différentes phases du procédé sont résumés dans le Tableau 3 ci-dessous.

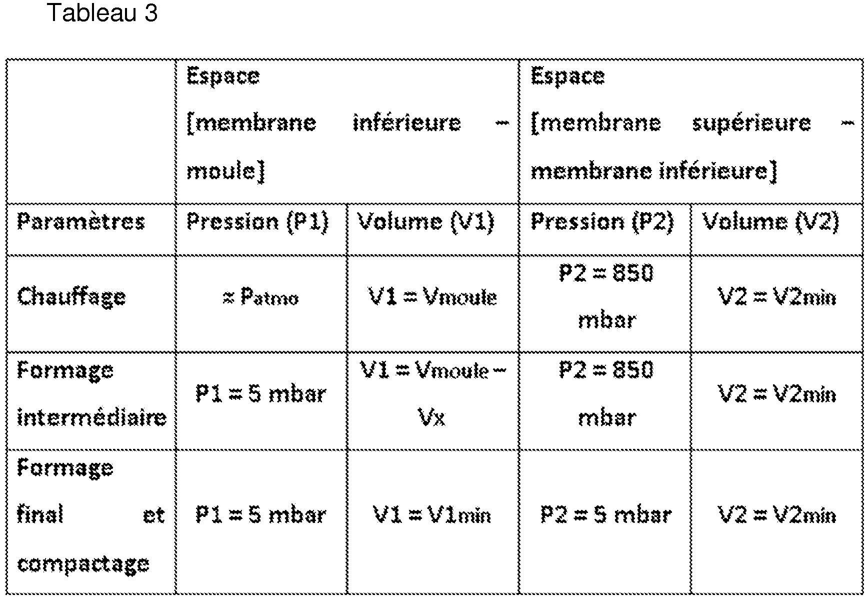

Dans ce cas, la surface totale de la préforme analysée était de 284247 mm2 et les défauts représentaient une surface de 14178 mm2, soit 5% de la surface totale.

### Exemple 1

L'exemple 1 a été réalisé selon le procédé présenté sur la **figure 6****.**

Après le positionnement des membranes **1** et **2** et de l'empilement **I,** comme dans l'exemple comparatif 1b, par ouverture de la vanne de sortie **30,** une aspiration de l'air dans l'espace inter-membranaire (seconde chambre **4**) a été réalisée pour atteindre une pression de 850 mbar, comme dans l'exemple comparatif 1c, alors que la vanne d'entrée **31** était fermée. Ensuite, la vanne de sortie **30** a été fermée. Un accostage local de l'ensemble membranes **1** et **2**/empilement **I** a alors été réalisé sur le sommet **27** de la protubérance **23,** en aspirant de l'air contenu dans la première chambre **3** formée par le moule **20** et la membrane inférieure **1** (durée inférieure à 10 secondes). Cette aspiration a été obtenue par activation de la vanne de sortie **32.** Ensuite, l'aspiration a été poursuivie jusqu'à l'obtention d'un plaquage de la membrane inférieure **1,** à la fois sur la protubérance **23** et le fond du moule **21,** tout en injectant de l'air dans la seconde chambre **4** inter-membranaire, grâce à la vanne d'entrée **31** et ainsi maintenir le volume total des chambres **3** et **4** sensiblement constant (durée d'injection de 5 minutes, avec un débit d'injection de 7,5 m3/h). Une fois le volume minimal de la première chambre **3** atteint, la pression dans cette première chambre **3** était égale à 5mbar. La vanne de sortie **32** a été fermée et la vanne d'entrée **31** également. L'air contenu dans la seconde chambre **4** inter-membranaire a alors été aspiré par la vanne de sortie **30,** jusqu'à atteindre le volume minimal de cette chambre et obtenir une pression de 5mbar dans cette dernière. La phase de formage final et de compactage a donc été réalisée avec une pression de 5mbar, à la fois dans la première chambre **3** et la seconde chambre **4.** Sa durée était de 30 minutes.

Le refroidissement et le démoulage ont été menés comme dans l'exemple comparatif 1a.

Les volumes et pressions dans les deux chambres **3** et **4,** lors des différentes phases du procédé sont résumés dans le Tableau 4 ci-dessous.

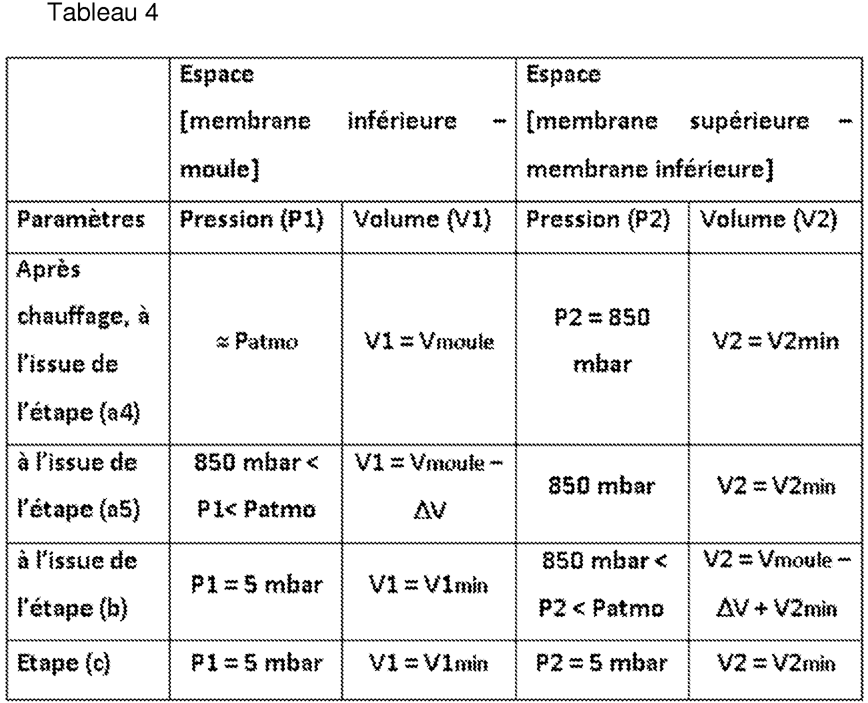

La surface totale (c'est-à-dire les faces externe et interne) de la préforme obtenue correspondant à 284750 mm2 a été analysée et a fait apparaitre une absence totale de défaut.

### Exemple 2

L'exemple 2 est réalisé selon le procédé présenté sur la **figure 7****.**

Le procédé est identique à celui de l'exemple 1 jusqu'à l'accostage de l'ensemble membranes **1** et **2**/empilement **I** sur le sommet **27** de la protubérance **23.** Ensuite, l'aspiration de l'air contenu dans la première chambre **3** formée par le moule **20** et la membrane inférieure **1** a été poursuivie jusqu'à l'obtention d'une pression intermédiaire de 850 mbar et d'un volume intermédiaire dans la première chambre **3,** tout en injectant de l'air dans la seconde chambre **4** inter-membranaire, grâce à la vanne d'entrée **31,** de manière à compenser par l'augmentation du volume de la seconde chambre **4,** la diminution du volume de la première chambre **3.** Ainsi, la pression **P2** a été maintenue à une valeur sensiblement constante de 850mbars et les deux membranes maintenues localement à distance de 15cm environ au niveau de leurs zones les plus éloignées. La vanne d'entrée **31** a ensuite été fermée et l'aspiration de l'air par la vanne de sortie **32** a été poursuivie jusqu'à obtenir un plaquage de la membrane inférieure **1,** à la fois sur la protubérance **23** et le fond du moule **21.** Une fois le volume minimal de la première chambre **3** atteint, la pression dans cette première chambre **3** était égale à 5mbar. La vanne de sortie **32** a été fermée. L'air contenu dans la seconde chambre **4** inter-membranaire a alors été aspiré par la vanne de sortie **30,** jusqu'à atteindre le volume minimal de cette chambre et obtenir une pression de 5mbar dans cette dernière. Le formage final et le compactage ont donc été réalisés avec une pression de 5 mbar, à la fois dans la première chambre **3** et la seconde chambre **4,** comme à l'exemple 1.

Le refroidissement et le démoulage ont été menés comme dans l'exemple comparatif 1a.

Les volumes et pressions dans les deux chambres **3** et **4,** lors des différentes phases du procédé sont résumés dans le Tableau 5 ci-dessous.

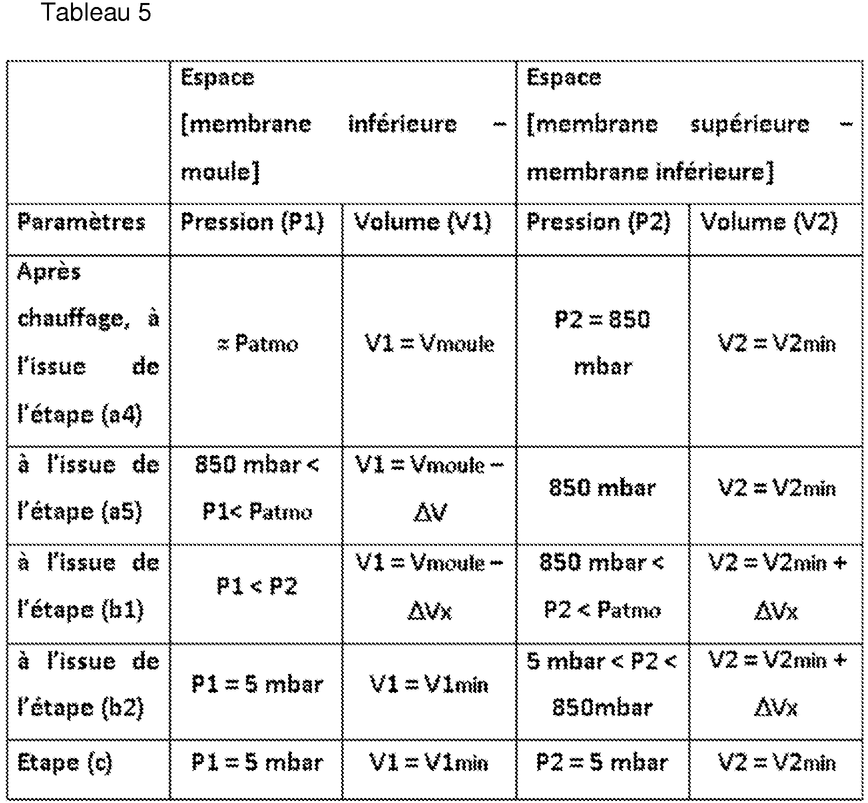

Dans les Tableaux des exemples, **ΔVx** = volume d'avancement associé à la seconde chambre **4** (espace inter-membranaire).

La surface totale (c'est-à-dire les faces externe et interne) de la préforme obtenue correspondant à 284750 mm2 a été analysée et a fait apparaitre une absence totale de défaut.

### Exemple 3

L'exemple 3 a été réalisé selon le même procédé et dans les mêmes conditions que dans l'exemple 2, mais sur un empilement différent. L'empilement ne comprenait pas 16 plis, mais 96 plis, conduisant à une plaque de 20 mm d'épaisseur.

Là encore, aucun défaut n'a été obtenu sur la préforme ainsi fabriquée.

### Exemple 4

L'exemple 4 a été réalisé avec le même empilement que pour les exemples 1 et 2, mais avec un positionnement décalé de l'empilement, par rapport au sommet de la protubérance qui avait une forme différente. Le sommet de la protubérance formait un angle de 90 °. Dans ce cas, une plaque de 300 mm sur 180 mm a été positionnée, de manière à ce que le sommet de la protubérance formant une ligne partage cette plaque en deux bandes parallèles : l'une de 120 mm et l'autre de 60 mm de large. La mise en œuvre du procédé simple membrane de l'art antérieur, avait conduit à l'obtention d'une préforme décalée, l'empilement ayant bougé de 47 mm, par rapport à sa position initiale, mais à une absence de défaut. L'utilisation du procédé double membrane selon l'exemple comparatif 1b ou 1c permettait un positionnement adéquat et donc d'éviter un décalage. Mais, ce procédé avait conduit à la présence de défauts.

La mise en œuvre du procédé tel que décrit à l'exemple 2, quant à lui, a conduit à la fois à une absence de décalage et de défaut.

## Revendications

1. Procédé pour préformer un matériau composite **(1)** se présentant sous la forme d'une plaque, ledit matériau composite **(I)** comprenant des fibres de renfort liées entre elles, notamment par une matière polymérique plastique, ledit procédé comprenant les phases successives suivantes :
**(a)** une phase d'agencement du matériau composite **(1)** au sein d'un dispositif de formage comprenant les opérations suivantes :
**(a1)** disposer d'un moule **(20)** dont le fond non plan définit une surface de formage **(22)** correspondant à la forme à donner au matériau composite **(1)** à préformer,
**(a2)** disposer, au-dessus du fond du moule **(21),** une première membrane, nommée membrane inférieure **(1),** sur laquelle est déposé le matériau composite (1) à préformer, et une seconde membrane s'étendant au-dessus du matériau composite **(1),** nommée membrane supérieure **(2),** lesdites deux membranes **(1** et **2)** pouvant subir des déformations élastiques et étant imperméables aux gaz **(III),** et ledit matériau composite **(I)** étant placé au-dessus de la surface de formage **(22),**
**(a3)** agencer les deux membranes **(1** et **2)** avec le moule **(20),** de manière à former :
- une première chambre **(3)** étanche entre le moule **(20)** et la membrane inférieure **(1),** ladite première chambre **(3)** définissant un premier volume **(V1)** modulable, et
- une seconde chambre **(4)** étanche entre les deux membranes **(1** et **2),** ladite seconde chambre **(4)** définissant un second volume **(V2)** modulable, nommé volume inter-membranaire, le matériau composite **(1)** étant logé dans ce volume inter-membranaire **(V2),**
(a4) aspirer du gaz (**III**) contenu dans la seconde chambre **(4),** et ainsi réduire le volume inter-membranaire **(V2),** de manière à ce que les deux membranes **(1** et **2)** soient toutes deux au contact du matériau composite (**I**),
**(a5)** réaliser un accostage local de la membrane inférieure **(1)** sur la surface de formage **(22),** en une zone de contact **(5)** au moins, le matériau composite et les deux membranes étant également en contact, au niveau de ladite zone de contact **(5),**
la phase d'agencement **(a)** conduisant à la mise en place du matériau composite **(1)** au sein du dispositif de formage ainsi obtenu, ledit dispositif de formage étant lui-même placé sous une pression extérieure **Pext** qui peut être égale à la pression atmosphérique, la mise en place du matériau composite au sein du dispositif de formage correspondant au maintien du matériau composite par les deux membranes toutes deux au contact de ce dernier, avec un accostage local de la membrane inférieure sur la surface de formage, en une zone de contact au moins,
**(b)** une phase de formage intermédiaire comprenant au moins les opérations suivantes :
- introduire du gaz (**III**) dans la seconde chambre **(4),** tout en maintenant la pression **P2** de la seconde chambre **(4)** en dessous de la pression extérieure **Pext,** et en particulier de la pression atmosphérique, lorsque la pression extérieure **Pext** est égale à la pression atmosphérique, et, ainsi tenir localement à distance la membrane supérieure **(2)** de la membrane inférieure **(1)** et du matériau composite (**I**), et tout en gardant, au niveau de la zone de contact **(5),** à la fois l'accostage et le contact entre le matériau composite (**I**) et les deux membranes **(1** et **2),**
- aspirer du gaz (**III**) contenu dans la première chambre **(3),** de manière à plaquer la membrane inférieure **(1)** sur toute la surface de formage **(22)** présente au fond **(21)** du moule **(20),**
**(c)** une phase de formage final et de compactage conduisant à la forme finale souhaitée pour le matériau composite préformé (**II**), au cours de laquelle un chauffage est appliqué, lors de laquelle le gaz (**III**) contenu dans la seconde chambre **(4)** est retiré, de manière à venir plaquer à la fois le matériau composite **(1)** et la membrane supérieure **(2)** sur la membrane inférieure **(1),** elle-même plaquée sur le fond du moule **(21),** en particulier sur la surface de formage **(22)** et obtenir une réduction de la pression **P2** de la seconde chambre **(4),** de manière à assurer le compactage,
**(d)** une phase de refroidissement et une phase de démoulage du matériau composite préformé (**II**).

2. Procédé selon la revendication 1, **caractérisé en ce que** tout au long du procédé, les deux membranes **(1** et **2)** sont maintenues en contact avec le matériau de renfort (**I**), au niveau de la zone de contact **(5)** au moins, avec l'ensemble membranes/matériau composite en appui sur la surface de formage **(22).**

3. Procédé selon la revendication 1 ou 2, **caractérisé en ce que** l'opération **(a5)** est réalisée après l'opération **(a4)** par aspiration de gaz (**III**) dans la première chambre **(3),** conduisant à la réduction de son volume **(V1),** de manière à établir un pré-contact entre la membrane inférieure **(1)** et la surface de formage **(22),** alors que le volume **(V2)** de la seconde chambre **(4)** est maintenu constant.

4. Procédé selon la revendication 1, 2 ou 3, **caractérisé en ce que** tout au long de la phase de formage intermédiaire, les introduction(s) et retraits de gaz (**III**) sont réalisés, de manière à ce que la pression **P1** dans la première chambre **(3)** et la pression **P2** dans la seconde chambre **(4)** soient contrôlées et/ou modifiées, de sorte que la pression **P1** reste inférieure à la pression **P2,** elle-même inférieure à la pression extérieure **Pext,** et, en particulier, inférieure à la pression atmosphérique lorsque la pression extérieure **Pext** est égale à la pression atmosphérique.

5. Procédé selon l'une des revendications 1 à 4, **caractérisé en ce que** tout au long de la phase de formage intermédiaire **(b),** un chauffage du matériau composite **(1)** est assuré, de manière à obtenir le ramollissement de la matière polymérique plastique.

6. Procédé selon la revendication 5, **caractérisé en ce qu'**il comprend une étape de montée en température, de sorte que tout au long de la phase de formage intermédiaire, un chauffage du matériau composite (**I**) est assuré, pour obtenir le ramollissement de la matière polymérique plastique et **en ce que**, lors de l'étape de montée en température, les volumes **(V1** et **V2)** de la première chambre **(3)** et de la seconde chambre **(4)** sont contrôlés pour éviter leur augmentation.

7. Procédé selon l'une des revendications 1 à 6, **caractérisé en ce que** la phase de formage intermédiaire **(b)** est réalisée en aspirant du gaz (**III**) contenu dans la première chambre **(3),** de manière à plaquer la membrane inférieure (**1**) ) sur toute la surface de formage **(22)** présente au fond **(21)** du moule **(20),** tout en introduisant du gaz (**III**) dans la seconde chambre **(4)** et en maintenant la pression **P2** dans la seconde chambre **(4)** en dessous de la pression extérieure **Pext,** et en particulier de la pression atmosphérique, lorsque la pression extérieure **Pext** est égale à la pression atmosphérique et, ainsi, augmenter le volume inter-membranaire **(V2),** et tenir localement à distance la membrane supérieure **(2)** de la membrane inférieure **(1),** tout en gardant, au niveau de la zone de contact **(5),** à la fois l'accostage et le contact entre le matériau composite (**I**) et les deux membranes **(1** et **2).**

8. Procédé selon la revendication 7, **caractérisé en ce que** la baisse du volume **(V1)** de la première chambre **(3)** est sensiblement égale à l'augmentation du volume **(V2)** de la seconde chambre **(4),**

9. Procédé selon l'une des revendications 1 à 6, **caractérisé en ce que** la phase de formage intermédiaire **(b)** comprend les opérations successives suivantes :
**(b1)** aspirer du gaz (**III**) contenu dans la première chambre **(3),** conduisant à la réduction du volume (**V1**), de manière à abaisser la membrane inférieure **(1),** en une position intermédiaire, tout en introduisant du gaz (**III**) dans la seconde chambre **(4)** et en maintenant la pression **P2** dans la seconde chambre **(4)** en dessous de la pression extérieure **Pext,** et en particulier de la pression atmosphérique, lorsque la pression extérieure **Pext** est égale à la pression atmosphérique et, ainsi, augmenter le volume inter-membranaire **(V2),** et tenir localement à distance la membrane supérieure **(2)** de la membrane inférieure **(1),** tout en gardant, au niveau de la zone de contact **(5),** à la fois l'accostage et le contact entre le matériau composite **(1)** et les deux membranes **(1** et **2),**
**(b2)** aspirer du gaz (**III**) contenu dans la première chambre **(3),** de manière à plaquer la membrane inférieure **(1)** sur toute la surface de formage **(22)** présente au fond **(21)** du moule **(20),** tout en maintenant constant le volume inter-membranaire **(V2),**

10. Procédé selon la revendication 9, **caractérisé en ce qu'**à l'étape **(b1),** la baisse du volume **(V1)** de la première chambre **(3)** est sensiblement égale à l'augmentation du volume **(V2)** de la seconde chambre **(4).**

11. Procédé selon l'une des revendications 1 à 6, **caractérisé en ce que** la phase de formage intermédiaire **(b)** comprend les opérations successives suivantes :
**(b'1)** aspirer du gaz (**III**) contenu dans la première chambre **(3),** conduisant à la réduction de son volume (**V1**), de manière à abaisser la membrane inférieure **(1),** en une position intermédiaire, tout en introduisant du gaz (**III**) dans la seconde chambre **(4)** et en maintenant la pression **P2** dans la seconde chambre **(4)** en dessous de la pression extérieure **Pext,** et en particulier de la pression atmosphérique, lorsque la pression extérieure **Pext** est égale à la pression atmosphérique et, ainsi, augmenter le volume inter-membranaire **(V2),** et tenir localement à distance la membrane supérieure **(2)** de la membrane inférieure **(1),** tout en gardant, au niveau de la zone de contact **(5),** à la fois l'accostage et le contact entre le matériau composite **(1)** et les deux membranes **(1** et **2),**
**(b'2)** aspirer du gaz (**III**) contenu dans la seconde chambre **(4)** et ainsi réduire le volume inter-membranaire **(V2),** de manière à abaisser la membrane supérieure **(2)** et à placer les deux membranes **(1** et **2)** toutes deux au contact du matériau composite **(1),**
**(b'3)** aspirer du gaz (**III**) contenu dans la première chambre **(3),** de manière à plaquer la membrane inférieure **(1)** sur toute la surface de formage **(22)** présente au fond **(21)** du moule (**20**), tout en introduisant du gaz (**III**) dans la seconde chambre **(4)** et en maintenant la pression **(P2)** dans la seconde chambre **(4)** en dessous de la pression extérieure **Pext,** et en particulier de la pression atmosphérique, lorsque la pression extérieure **Pext** est égale à la pression atmosphérique et, ainsi, augmenter le volume inter-membranaire **(V2),** et tenir localement à distance la membrane supérieure **(2)** de la membrane inférieure **(1),** tout en gardant, au niveau de la zone de contact **(5),** à la fois l'accostage et le contact entre le matériau composite (**I**) et les deux membranes **(1** et **2).**

12. Procédé selon la revendication 11, **caractérisé en ce qu'**à l'opération (**b'1**) et/ou à l'opération **(b'3),** la baisse du volume **(V1)** de la première chambre **(3)** est sensiblement égale à l'augmentation du volume **(V2)** de la seconde chambre **(4).**

13. Procédé selon la revendication 11 ou 12, **caractérisé en ce que** les opérations **(b'1)** à **(b'2)** sont répétées, notamment une à dix fois, de manière à abaisser graduellement la membrane inférieure **(1)** et la membrane supérieure **(2).**

14. Procédé selon l'une des revendications 1 à 13, **caractérisé en ce qu'**aux étapes **(a2)** et **(a3),** les deux membranes **(1** et **2)** sont disposées horizontalement.

15. Procédé selon l'une des revendications 1 à 14, **caractérisé en ce que**, lors de la phase de refroidissement, la pression dans la première chambre **(3)** est augmentée pour réduire les frottements avec le moule (**20**).

16. Procédé selon l'une des revendications 1 à 15 **caractérisé en ce que** la matière polymérique plastique représente au plus 10% de la masse totale du matériau composite **(1),** de préférence de 0,5 à 10% de la masse totale du matériau composite (**I**), et préférentiellement de 2 à 6% de la masse totale du matériau composite **(I).**

17. Procédé selon l'une des revendications 1 à 16 **caractérisé en ce que** la matière polymérique plastique est choisie parmi les polymères thermoplastiques, les polymères thermodurcissables, les polymères comprenant une part thermoplastique et une part thermoréticulable ou thermoréticulée, et leurs mélanges.

18. Procédé selon l'une des revendications 1 à 17 **caractérisé en ce que** le matériau composite (**I**) comprend un empilement de couches de renfort fibreuses, notamment choisies parmi les tissus et les nappes unidirectionnelles de fibres de renfort.

19. Procédé selon l'une des revendications 1 à 18 **caractérisé en ce que** les fibres de renfort sont des fibres de verre, de carbone, d'aramide ou de céramique, les fibres de carbone étant particulièrement préférées.

20. Dispositif pour préformer un matériau composite (**I**) se présentant sous la forme d'une plaque, comprenant :
- un moule **(20)** dont le fond **(21)** non plan définit une surface de formage **(22)** pour un matériau composite (I) à préformer,
- une première membrane, nommée membrane inférieure **(1),** une seconde membrane, nommée membrane supérieure **(2),** lesdites deux membranes **(1** et **2)** étant déformables élastiquement et imperméables aux gaz (**III**), et étant placées l'une au-dessus de l'autre en s'étendant au-dessus du fond du moule **(21),**
- un dispositif d'agencement **(9)** permettant de former avec les deux membranes **(1** et **2)** et le moule **(20)** :
- une première chambre **(3)** étanche entre le moule **(20)** et la membrane inférieure **(1),** ladite première chambre **(3)** définissant un premier volume **(V1)** modulable, et
- une seconde chambre **(4)** étanche entre les deux membranes **(1** et **2),** ladite seconde chambre **(4)** définissant un second volume **(V2)** modulable, nommé volume inter-membranaire, étant destiné à recevoir le matériau composite (**I**) à préformer,
- la première et la seconde chambres **(3** et **4)** étant chacune équipées, d'un obturateur de sortie **(30** et **32),** permettant d'assurer la sortie du milieu gazeux contenu dans ladite chambre, lesdits obturateurs de sortie **(30** et **32)** étant chacun reliés à un circuit équipé d'un régulateur de la circulation et de la pression en milieu gazeux, permettant d'obtenir une aspiration du milieu gazeux depuis la chambre concernée,
**caractérisé en ce que** la seconde chambre **(4)** est équipée d'un obturateur d'entrée **(31),** permettant d'assurer l'entrée d'un milieu gazeux dans la seconde chambre **(4),** ledit obturateur d'entrée **(31)** étant relié à un circuit équipé d'un régulateur de la circulation et de la pression en milieu gazeux, permettant d'assurer l'introduction d'un milieu gazeux dans la seconde chambre (**4**).

21. Dispositif selon la revendication 20, **caractérisé en ce que** la première chambre **(3)** est équipée d'un obturateur d'entrée **(33),** permettant d'assurer l'entrée d'un milieu gazeux dans la première chambre **(3),** ledit obturateur d'entrée **(33)** étant relié à un circuit équipé d'un régulateur de circulation et de la pression en milieu gazeux, permettant d'assurer l'introduction d'un milieu gazeux dans la première chambre **(3).**

22. Dispositif selon la revendication 20 ou 21, **caractérisé en ce qu'**il comprend un circuit externe **(34)** pour la circulation de gaz (**III**) de la première chambre **(3)** vers la seconde chambre.

## Patentansprüche

1. Verfahren zum Vorformen eines Verbundwerkstoffs (**I**), der in Form einer Platte vorliegt, wobei der Verbundwerkstoff (**I**) Verstärkungsfasern umfasst, die insbesondere durch ein polymeres Kunststoffmaterial miteinander verbunden sind, wobei das Verfahren die folgenden aufeinanderfolgenden Phasen umfasst:
(**a**) eine Phase des Ausgestalten des Verbundwerkstoffs (**I**) innerhalb einer Formvorrichtung, umfassend die folgenden Vorgänge:
(**a1**) Bereitstellen einer Form (**20**), deren nicht ebener Boden eine Formfläche (**22**) definiert, die der Form entspricht, welche dem vorzuformenden Verbundwerkstoff (**I**) verliehen werden soll,
(**a2**) Bereitstellen, über dem Boden der Form (**21**), einer ersten Membran, die als untere Membran (**1**) bezeichnet wird, auf die der vorzuformende Verbundwerkstoff (**I**) aufgebracht wird, sowie einer zweiten Membran, die sich über dem Verbundwerkstoff (**I**) erstreckt und als obere Membran (**2**) bezeichnet wird, wobei die beiden Membranen (**1** und **2**) elastisch verformbar sind und für Gas (**III**) undurchlässig sind, und wobei der Verbundwerkstoff (**I**) über der Formfläche (**22**) platziert wird,
(**a3**) Einlegen der beiden Membranen (**1** und **2**) in die Form (**20**) derart, dass Folgendes gebildet wird:
- eine erste, dichte Kammer (**3**) zwischen der Form (**20**) und der unteren Membran (**1**), wobei die erste Kammer (**3**) ein erstes, anpassbares Volumen (**V1**) definiert, und
- eine zweite, dichte Kammer (**4**) zwischen den beiden Membranen (**1** und **2**), wobei die zweite Kammer (**4**) ein zweites, anpassbares Volumen (**V2**) definiert, das als Zwischenmembranvolumen bezeichnet wird, wobei sich der Verbundwerkstoff (**I**) in diesem Zwischenmembranvolumen (**V2**) befindet,
**(a4)** Ansaugen des Gases (**III**), das in der zweiten Kammer (**4**) enthalten ist, und dadurch Verringern des Zwischenmembranvolumens (**V2**), sodass die beiden Membranen (**1** und **2**) alle beide in Kontakt mit dem Verbundwerkstoff (**I**) stehen,
**(a5)** Vornehmen einer lokalen Anlegung der unteren Membran (**1**) an die Formfläche (**22**) in mindestens einem Kontaktbereich (**5**), wobei der Verbundwerkstoff und die beiden Membranen in dem Kontaktbereich (**5**) ebenfalls miteinander in Kontakt stehen,
wobei die Phase des Anordnens (**a**), die zur Einbringung des Verbundwerkstoffs (**I**) in die so erhaltene Formvorrichtung führt, wobei die Formvorrichtung selbst einem Außendruck **Pext** ausgesetzt ist, der dem Atmosphärendruck entsprechen kann, wobei das Einbringen des Verbundwerkstoffs in die Formvorrichtung darin besteht, dass der Verbundwerkstoff durch die beiden Membranen, die beide mit diesem in Kontakt stehen, festgehalten wird, wobei die untere Membran in mindestens einem Kontaktbereich lokal an der Formfläche anliegt,
(**b**) eine Phase der Zwischenformung, umfassend mindestens die folgenden Vorgänge:
- Einleiten von Gas (**III**) in die zweite Kammer (**4**), wobei der Druck **P2** der zweiten Kammer (**4**) unter dem Außendruck **Pext**, und insbesondere unter dem Atmosphärendruck, gehalten wird, wenn der Außendruck **Pext** dem Atmosphärendruck entspricht, und Fernhalten der oberen Membran (**2**) lokal von der unteren Membran (**1**) und von dem Verbundwerkstoff (**I**) und dabei Aufrechterhalten, im Kontaktbereich (**5**), sowohl des Anliegens als auch des Kontakts zwischen dem Verbundwerkstoff (**I**) und den beiden Membranen (**1** und **2**),
- Ansaugen von Gas (**III**), das in der ersten Kammer (**3**) enthalten ist, um die untere Membran (**1**) flächendeckend an der gesamten Formfläche (**22**) am Boden (**21**) der Form (**20**) anzulegen,
(**c**) eine Phase der abschließenden Formung und der Verdichtung, die zu der gewünschten Endform des vorgeformten Verbundwerkstoffs (**II**) führt, wobei eine Erwärmung erfolgt, bei der das Gas (**III**), das in der zweiten Kammer (**4**) enthalten ist, entweicht, sodass sowohl der Verbundwerkstoff (**I**) als auch die obere Membran (**2**) an die untere Membran (**1**), gepresst werden, die ihrerseits am Formboden (**21**) anliegt, insbesondere an der Formfläche (**22**) anliegt, und eine Verringerung des Drucks **P2** in der zweiten Kammer (**4**) erreicht wird, um die Verdichtung sicherzustellen,
(**d**) eine Phase des Abkühlens und eine Phase der Entformung des vorgeformten Verbundwerkstoffs (**II**).

2. Verfahren nach Anspruch 1, **dadurch gekennzeichnet, dass** während des gesamten Verfahrens die beiden Membranen (**1** und **2**) in Kontakt mit dem Verstärkungsmaterial (**I**) gehalten werden, zumindest im Kontaktbereich (**5**), wobei die Einheit aus Membranen und Verbundwerkstoff auf der Formfläche (**22**) aufliegt.

3. Verfahren nach Anspruch 1 oder 2, **dadurch gekennzeichnet, dass** der Vorgang (**a5**) nach dem Vorgang (**a4**) durch Ansaugen von Gas (**III**) in der ersten Kammer (**3**) stattfindet, was zu einer Verringerung seines Volumens (**V1**) führt, um einen Vorkontakt zwischen der unteren Membran (**1**) und der Formfläche (**22**) herzustellen, während das Volumen (**V2**) der zweiten Kammer (**4**) konstant gehalten wird.

4. Verfahren nach Anspruch 1, 2 oder 3, **dadurch gekennzeichnet, dass** während der gesamten Phase der Zwischenformung die Einleitung(en) und Entnahme(n) von Gas (**III**) so durchgeführt werden, dass der Druck **P1** in der ersten Kammer (**3**) und der Druck **P2** in der zweiten Kammer (**4**) so gesteuert und/oder verändert werden, dass der Druck **P1** unter dem Druck **P2** bleibt, der seinerseits unter dem Außendruck **Pext** liegt, und insbesondere unter dem Atmosphärendruck bleibt, wenn der Außendruck **Pext** dem Atmosphärendruck entspricht.

5. Verfahren nach einem der Ansprüche 1 bis 4, **dadurch gekennzeichnet, dass** während der gesamten Phase der Zwischenformung (**b**) eine Erwärmung des Verbundwerkstoffs (**I**) sichergestellt wird, um eine Erweichung des polymeren Kunststoffmaterials zu erreichen.

6. Verfahren nach Anspruch 5, **dadurch gekennzeichnet, dass** es einen Schritt zum Erhöhen der Temperatur umfasst, sodass während der gesamten Phase der Zwischenformung eine Erwärmung des Verbundwerkstoffs (**I**) sichergestellt wird, um eine Erweichung des polymeren Kunststoffmaterials zu erreichen, und dadurch, dass während des Schritts zum Erhöhen der Temperatur die Volumina (**V1** und **V2**) der ersten Kammer (**3**) und der zweiten Kammer (**4**) geregelt werden, um deren Zunahme zu verhindern.

7. Verfahren nach einem der Ansprüche 1 bis 6, **dadurch gekennzeichnet, dass** die Phase der Zwischenformung (**b**) durchgeführt wird durch Ansaugen von Gas (**III**), das in der ersten Kammer (**3**) enthalten ist, um die untere Membran (**1**) ) auf die gesamte Formfläche (**22**) am Boden (**21**) der Form (**20**) zu drücken, während gleichzeitig Gas (**III**) in die zweite Kammer (**4**) eingeleitet wird und der Druck **P2** in der zweiten Kammer (**4**) unter dem Außendruck **Pext**, und insbesondere dem Atmosphärendruck, gehalten wird, wenn der Außendruck **Pext** dem Atmosphärendruck entspricht, und dadurch das Zwischenmembranvolumen (**V2**) vergrößert wird, wodurch die obere Membran (**2**) lokal von der unteren Membran (**1**) ferngehalten wird, wobei im Kontaktbereich (**5**) sowohl das Anliegen als auch der Kontakt zwischen dem Verbundwerkstoff (**I**) und den beiden Membranen (**1** und **2**) aufrechterhalten werden.

8. Verfahren nach Anspruch 7, **dadurch gekennzeichnet, dass** die Verringerung des Volumens (**V1**) der ersten Kammer (**3**) im Wesentlichen gleich der Vergrößerung des Volumens (**V2**) der zweiten Kammer (**4**) ist.

9. Verfahren nach einem der Ansprüche 1 bis 6, **dadurch gekennzeichnet, dass** die Phase der Zwischenformung (**b**) die folgenden Vorgänge umfasst:
(**b1**) Ansaugen von Gas (**III**), das in der ersten Kammer (**3**) enthalten ist, was zu einer Verringerung des Volumens (**V1**) führt, um die untere Membran (**1**) in eine Zwischenposition abzusenken, während gleichzeitig Gas (**III**) in die zweite Kammer (**4**) eingeleitet wird und der Druck **P2** in der zweiten Kammer (**4**) unter dem Außendruck **Pext**, und insbesondere dem Atmosphärendruck, gehalten wird, wenn der Außendruck **Pext** dem Atmosphärendruck entspricht, und dadurch das Zwischenmembranvolument (**V2**) vergrößert wird, wodurch die obere Membran (**2**) lokal von der unteren Membran (**1**) ferngehalten wird, wobei im Kontaktbereich (**5**) sowohl das Anliegen als auch der Kontakt zwischen dem Verbundwerkstoff (**I**) und den beiden Membranen (**1** und **2**) aufrechterhalten werden,
(**b2**) Ansaugen von Gas (**III**), das in der ersten Kammer (**3**) enthalten ist, um die untere Membran (**1**) flächendeckend an der gesamten Formfläche (**22**) am Boden (**21**) der Form (**20**) anzulegen, während das Zwischenmembranvolumen (**V2**) konstant gehalten wird.

10. Verfahren nach Anspruch 9, **dadurch gekennzeichnet, dass** im Schritt (**b1**) die Verringerung des Volumens (**V1**) der ersten Kammer (**3**) im Wesentlichen gleich der Vergrößerung des Volumens (**V2**) der zweiten Kammer (**4**) ist.

11. Verfahren nach einem der Ansprüche 1 bis 6, **dadurch gekennzeichnet, dass** die Phase der Zwischenformung (**b**) die folgenden Vorgänge umfasst:
(**b'1**) Ansaugen von Gas (**III**), das in der ersten Kammer (**3**) enthalten ist, was zu einer Verringerung seines Volumens (**V1**) führt, um die untere Membran (**1**) in eine Zwischenposition abzusenken, während gleichzeitig Gas (**III**) in die zweite Kammer (**4**) eingeleitet wird und der Druck **P2** in der zweiten Kammer (**4**) unter dem Außendruck **Pext**, und insbesondere dem Atmosphärendruck, gehalten wird, wenn der Außendruck **Pext** dem Atmosphärendruck entspricht, und dadurch das Zwischenmembranvolument (**V2**) vergrößert wird, wodurch die obere Membran (**2**) lokal von der unteren Membran (**1**) ferngehalten wird, wobei im Kontaktbereich (**5**) sowohl das Anliegen als auch der Kontakt zwischen dem Verbundwerkstoff (**I**) und den beiden Membranen (**1** und **2**) aufrechterhalten werden,
(**b'2**) Ansaugen des Gases (**III**), das in der zweiten Kammer (**4**) enthalten ist, und dadurch Verringern des Zwischenmembranvolumens (**V2**), sodass die obere Membran (**2**) abgesenkt wird und die beiden Membranen (**1** und **2**) alle beide in Kontakt mit dem Verbundwerkstoff (**I**) stehen,
(**b'3**) Ansaugen von (**III**), das in der ersten Kammer (**3**) enthalten ist, um die untere Membran (**1**) auf die gesamte Formfläche (**22**) am Boden (**21**) der Form (**20**) zu drücken, während gleichzeitig Gas (**III**) in die zweite Kammer (**4**) eingeleitet wird und der Druck (**P2**) in der zweiten Kammer (**4**) unter dem Außendruck **Pext**, und insbesondere dem Atmosphärendruck, gehalten wird, wenn der Außendruck **Pext** dem Atmosphärendruck entspricht, und dadurch das Zwischenmembranvolumen (**V2**) vergrößert wird, wodurch die obere Membran (**2**) lokal von der unteren Membran (**1**) ferngehalten wird, wobei im Kontaktbereich (**5**) sowohl das Anliegen als auch der Kontakt zwischen dem Verbundwerkstoff (**I**) und den beiden Membranen (**1** und **2**) aufrechterhalten werden.

12. Verfahren nach Anspruch 11, **dadurch gekennzeichnet, dass** bei dem Vorgang (**b'1**) und/oder bei dem Vorgang (**b'3**) die Verringerung des Volumens (**V1**) der ersten Kammer (**3**) im Wesentlichen gleich der Vergrößerung des Volumens (**V2**) der zweiten Kammer (**4**) ist.

13. Verfahren nach Anspruch 11 oder 12, **dadurch gekennzeichnet, dass** die Vorgänge (**b'1**) bis (**b'2**) wiederholt werden, insbesondere ein- bis zehnmal, um die untere Membran (**1**) und die obere Membran (**2**) allmählich abzusenken.

14. Verfahren nach einem der Ansprüche 1 bis 13, **dadurch gekennzeichnet, dass** in den Schritten (**a2**) und (**a3**) die beiden Membranen (**1** und **2**) horizontal angeordnet sind.

15. Verfahren nach einem der Ansprüche 1 bis 14, **dadurch gekennzeichnet, dass** während der Phase des Abkühlens der Druck in der ersten Kammer (**3**) erhöht wird, um die Reibung an der Form (**20**) zu verringern.

16. Verfahren nach einem der Ansprüche 1 bis 15, **dadurch gekennzeichnet, dass** das polymere Kunststoffmaterial höchstens 10 % der Gesamtmasse des Verbundwerkstoffs (**I**) ausmacht, vorzugsweise 0,5 bis 10 % der Gesamtmasse des Verbundwerkstoffs (**I**), und bevorzugt 2 bis 6 % der Gesamtmasse des Verbundwerkstoffs (**I**).

17. Verfahren nach einem der Ansprüche 1 bis 16, **dadurch gekennzeichnet, dass** das polymere Kunststoffmaterial aus thermoplastischen Polymeren, duroplastischen Polymeren, Polymeren, die einen thermoplastischen Anteil und einen thermisch vernetzbaren oder thermisch vernetzten Anteil enthalten, sowie deren Mischungen ausgewählt wird.

18. Verfahren nach einem der Ansprüche 1 bis 17, **dadurch gekennzeichnet, dass** der Verbundwerkstoff (**I**) einen Stapel aus faserverstärkten Schichten umfasst, die insbesondere aus Geweben und unidirektionalen Verstärkungsfaservliesen ausgewählt sind.

19. Verfahren nach einem der Ansprüche 1 bis 18, **dadurch gekennzeichnet, dass** die Verstärkungsfasern Glas-, Kohlenstoff-, Aramid- oder Keramikfasern sind, wobei Kohlenstofffasern besonders bevorzugt sind.

20. Vorrichtung zum Vorformen eines Verbundwerkstoffs (**I**), der in Form einer Platte vorliegt, umfassen:
- eine Form (**20**), deren nicht ebener Boden (**21**) eine Formfläche (**22**) für einen vorzuformenden Verbundwerkstoff (**I**) definiert,
- eine erste Membran, die als untere Membran (**1**) bezeichnet wird, eine zweite Membran, die als obere Membran (**2**) bezeichnet wird, wobei die beiden Membranen (**1** und **2**) elastisch verformbar sind und für Gas (**III**) undurchlässig sind, und übereinander angeordnet sind und sich über dem Boden der Form (**21**) erstrecken,
- eine Ausgestaltungsvorrichtung (**9**), die es ermöglicht, mit den beiden Membranen (**1** und **2**) und der Form (**20**) Folgendes auszugestalten:
- eine erste, dichte Kammer (**3**) zwischen der Form (**20**) und der unteren Membran (**1**), wobei die erste Kammer (**3**) ein erstes, anpassbares Volumen (**V1**) definiert, und
- eine zweite, dichte Kammer (**4**) zwischen den beiden Membranen (**1** und **2**), wobei die zweite Kammer (**4**) ein zweites, anpassbares Volumen (**V2**) definiert, das als Zwischenmembranvolumen bezeichnet wird, welches dafür vorgesehen ist, den vorzuformenden Verbundwerkstoff (**I**) aufzunehmen,
- wobei die erste und die zweite Kammer (**3** und **4**) jeweils mit einem Auslassverschluss (**30** und **32**) ausgestattet sind, wodurch es ermöglicht wird, den Austritt des in der jeweiligen Kammer enthaltenen gasförmigen Mediums zu gewährleisten, wobei die Auslassverschlüsse (**30** und **32**) jeweils mit einem Kreislauf verbunden sind, der mit einem Durchfluss- und Druckregler für das gasförmige Medium ausgestattet ist, wodurch ein Ansaugen des gasförmigen Mediums aus der betreffenden Kammer ermöglicht wird,
**dadurch gekennzeichnet, dass** die zweite Kammer (**4**) mit einem Einlassverschluss (**31**) ausgestattet ist, wodurch es ermöglicht wird, den Eintritt eines gasförmigen Mediums in die zweite Kammer (**4**) zu gewährleisten, wobei der Einlassverschluss (**31**) mit einem Kreislauf verbunden ist, der mit einem Durchfluss- und Druckregler für das gasförmige Medium ausgestattet ist, wodurch die Einleitung eines gasförmigen Mediums in die zweite Kammer (**4**) gewährleistet wird.

21. Vorrichtung nach Anspruch 20, **dadurch gekennzeichnet, dass** die erste Kammer (**3**) mit einem Einlassverschluss (**33**) ausgestattet ist, wodurch es ermöglicht wird, den Eintritt eines gasförmigen Mediums in die erste Kammer (**3**) zu gewährleisten, wobei der Einlassverschluss (**33**) mit einem Kreislauf verbunden ist, der mit einem Durchfluss- und Druckregler für das gasförmige Medium ausgestattet ist, wodurch die Einleitung eines gasförmigen Mediums in die erste Kammer (**3**) gewährleistet wird.

22. Vorrichtung nach Anspruch 20 oder 21, **dadurch gekennzeichnet, dass** sie einen externen Kreislauf (**34**) für die Zirkulation des Gases (**III**) von der ersten Kammer (**3**) zu der zweiten Kammer umfasst.

## Claims

1. Process for preforming a composite material (**I** in the form of a plate, said composite material (**I**) comprising reinforcing fibers bonded together, in particular by a plastic polymer material, said process comprising the following successive phases :
**(a)** phase during which a composite material (**I**) is positioned within a forming device comprising the following operations:
**(a1)** providing a mold (**20**) whose non-planar bottom defines a forming surface (**22**) corresponding to the shape to be given to the composite material (**I**) to be preformed,
**(a2)** positioning, above the bottom of the mold (**21**), a first diaphragm, referred to as the lower diaphragm (**1**), on which the composite material (**I**) to be preformed is deposited, and a second diaphragm extending above the composite material (**I**), referred to as the upper diaphragm (**2**), said two diaphragms (**1** and **2**) being elastically deformable and impermeable to gas (**III**), and said composite material (**I**) being placed above the forming surface (**22**),
**(a3)** position the two diaphragms (**1** and **2**) together with the mold (**20**) so as to form:
- a first sealed chamber (**3**) between the mold (**20**) and the lower diaphragm (**1**), said first chamber (**3**) defining a first variable volume (**V1**), and
- a second sealed chamber (**4**) between the two diaphragms (**1** and **2**), said second chamber (**4**) defining a second variable volume (**V2**), referred to as the inter-diaphragm volume, the composite material (**I**) being housed in this inter-diaphragm volume (**V2**),
**(a4)** evacuate the gas (**III**) from the second chamber (**4**), and thereby reduce the inter-diaphragm volume (**V2**), so that both diaphragms (**1** and **2**) are in contact with the composite material (**I**),
**(a5)** perform a local alignment of the lower diaphragm (**1**) on the forming surface (**22**) in at least one contact zone (**5**), the composite material and the two diaphragms also being in contact at said contact zone (**5**), the positioning phase (**a**) resulting in the placement of the composite material (**I**) within the forming device thereby obtained, said forming device itself being placed under an external pressure **Pext** which may be equal to atmospheric pressure, the placement of the composite material within the forming device corresponding to the composite material being held by the two diaphragms both in contact with the composite material, with a local alignment of the lower diaphragm on the forming surface, in at least one contact zone,
**(b)** an intermediate forming phase comprising at least the following operations:
- introducing gas (**III**) into the second chamber (**4**), while maintaining the pressure **P2** of the second chamber (**4**) below the external pressure **Pext**, and in particular atmospheric pressure, when the external pressure **Pext** is equal to atmospheric pressure, and thereby locally maintaining the upper diaphragm (**2**) at a distance from the lower diaphragm (**1**) and the composite material (**I**), and while maintaining, at the contact zone (**5**), both the alignment and the contact between the composite material (**I**) and the two diaphragms (**1** and **2**),
- evacuating gas (**III**) contained in the first chamber (**3**), so as to press the lower diaphragm (**1**) over the entire forming surface (**22**) present at the bottom (**21**) of the mold (**20**),
**(c)** a final forming and compaction phase resulting in the desired final shape of the preformed composite material (**II**), during which heating is applied and gas (**III**) contained in the second chamber (**4**) is removed, so as to press both the composite material (**I**) and the upper diaphragm (**2**) onto the lower diaphragm (**1**), which itself is pressed onto the bottom of the mold (**21**), in particular on the forming surface (**22**), and to obtain a reduction in the pressure **P2** of the second chamber (**4**), so as to ensure compaction,
**(d)** a cooling phase and an unmolding phase of the preformed composite material (**II**).

2. Process according to Claim 1, **characterized in that** throughout the process, the contact of the two diaphragms (**1** and **2**) with the reinforcing material (**I**) is maintained, at least in the contact zone (**5**), with the diaphragm/composite material assembly resting on the forming surface (**22**).

3. Process according to Claim 1 or 2, **characterized in that** operation (**a5** is performed after operation (**a4**) by evacuating gas (**III**) into the first chamber (**3**), resulting in the reduction in its volume (**V1**), so as to establish a precontact between the lower diaphragm (**1**) and the forming surface (**22**), while the volume (**V2**) of the second chamber (**4**) is held constant.

4. Process according to Claim 1, 2 or 3, **characterized in that** throughout the intermediate forming phase, the introduction(s) and withdrawal(s) of gas (**III**) are performed in such a way that the pressure **P1** in the first chamber (**3**) and the pressure **P2** in the second chamber (**4**) are controlled and/or modified so that the pressure **P1** remains lower than the pressure **P2**, which is itself lower than the external pressure **Pext**, and, in particular, lower than atmospheric pressure when the external pressure **Pext** is equal to atmospheric pressure.

5. Process according to one of Claims 1 to 4, **characterized in that** throughout the intermediate forming phase **(b)**, the composite material (**I**) is heated so as to obtain softening of the plastic polymer material.

6. Process according to Claim 5, **characterized in that** it comprises a temperature rise step, so that throughout the intermediate forming phase, heating of the composite material (**I**) is provided, in order to obtain softening of the plastic polymer material and **in that**, during the temperature rise step, the volumes (**V1** and **V2**) of the first chamber (**3**) and of the second chamber (**4**) are controlled so as to prevent their increasing.

7. Process according to one of Claims 1 to 6, **characterized in that** the intermediate forming stage (**b**) is performed by evacuating gas (**III**) contained in the first chamber (**3**), so as to press the lower diaphragm (**1**) against the entire forming surface (**22**) present at the bottom (**21**) of the mold (**20**), while introducing gas (**III**) into the second chamber (**4**) and maintaining the pressure **P2** in the second chamber (**4**) below the external pressure **Pext**, and in particular atmospheric pressure, when the external pressure **Pext** is equal to atmospheric pressure and thereby increasing the inter-diaphragm volume (**V2**), and locally maintaining the upper diaphragm (**2**) at a distance from the lower diaphragm (**1**), while maintaining, at the contact zone (**5**), both the alignment and the contact between the composite material (**I**) and the two diaphragms (**1** and **2**).

8. Process according to Claim 7, **characterized in that** the decrease in the volume (**V1**) of the first chamber (**3**) is substantially equal to the increase in the volume (**V2**) of the second chamber (**4**).

9. Process according to one of Claims 1 to 6, **characterized in that** the intermediate forming step (**b**) comprises the following successive steps:
**(b1)** evacuating gas (**III**) contained in the first chamber (**3**), resulting in the reduction in the volume (**V1**), so as to cause the lower diaphragm (**1**) to descend to an intermediate position, while introducing gas (**III**) into the second chamber (**4**) and maintaining the pressure **P2** in the second chamber (**4**) below the external pressure **Pext**, and in particular atmospheric pressure, when the external pressure **Pext** is equal to atmospheric pressure and thereby increasing the inter-diaphragm volume (**V2**), and locally maintaining the upper diaphragm (**2**) at a distance from the lower diaphragm (**1**), while maintaining, at the contact zone (**5**), both the alignment and the contact between the composite material (**I**) and the two diaphragms (**1** and **2**),
**(b2)** evacuating gas (**III**) contained in the first chamber (**3**), so as to press the lower diaphragm (**1**) over the entire forming surface (**22**) present at the bottom (**21**) of the mold (**20**), while maintaining the inter-diaphragm volume (**V2**) constant.

10. Process according to Claim 9, **characterized in that** in step (**b1**, the decrease in the volume (**V1**) of the first chamber (**3**) is substantially equal to the increase in the volume (**V2**) of the second chamber (**4**).

11. Process according to one of Claims 1 to 6, **characterized in that** the intermediate forming step **(b)** comprises the following successive steps:
**(b'1)** evacuating the gas (**III**) contained in the first chamber (**3**), resulting in the reduction in its volume (**V1**), so as to cause the lower diaphragm (**1**) to descend to an intermediate position, while introducing gas (**III**) into the second chamber (**4**) and maintaining the pressure **P2** in the second chamber (**4**) below the external pressure **Pext**, and in particular atmospheric pressure, when the external pressure **Pext** is equal to atmospheric pressure and thereby increasing the inter-diaphragm volume (**V2**), and locally maintaining the upper diaphragm (**2**) at a distance from the lower diaphragm (**1**), while maintaining, at the contact zone (**5**), both the alignment and the contact between the composite material (**I**) and the two diaphragms (**1** and **2**),
**(b'2)** evacuating the gas (**III**) from the second chamber (**4**) and thereby reducing the inter-diaphragm volume (**V2**), so as to cause the upper diaphragm (**2**) to descend and place both diaphragms (**1** and **2**) in contact with the composite material (**I**),
**(b'3)** evacuating the gas (**III**) contained in the first chamber (**3**), so as to press the lower diaphragm (**1**) over the entire forming surface (**22**) present at the bottom (**21**) of the mold (**20**), while introducing gas (**III**) into the second chamber (**4**) and maintaining the pressure (**P2**) in the second chamber (**4**) below the external pressure **Pext**, and in particular atmospheric pressure, when the external pressure **Pext** is equal to atmospheric pressure and thereby increasing the inter-diaphragm volume (**V2**), and locally maintaining the upper diaphragm (**2**) at a distance from the lower diaphragm (**1**), while maintaining, at the contact zone (**5**), both the alignment and the contact between the composite material (**I**) and the two diaphragms (**1** and **2**).

12. Process according to Claim 11, **characterized in that** in operation (**b'1**) and/or in operation (**b'3**) the decrease in the volume (**V1**) of the first chamber (**3**) is substantially equal to the increase in the volume (**V2**) of the second chamber (**4**).

13. Process according to Claim 11 or 12, **characterized in that** the operations (**b'1**) to (**b'2**) are repeated, in particular one to ten times, so as to cause the gradual descent of the lower diaphragm (**1**) and the upper diaphragm (**2**).

14. Process according to one of Claims 1 to 13, **characterized in that** in steps (**a2**) and (**a3**) both diaphragms (**1** and **2**) are positioned horizontally.

15. Process according to Claims 1 to 14, **characterized in that** during the cooling phase the pressure in the first chamber (**3**) is increased in order to reduce friction with the mold (**20**).

16. Process according to one of Claims 1 to 15, **characterized in that** the plastic polymer material comprises at most 10% of the total weight of the composite material (**I**), preferably 0.5% to 10% of the total weight of the composite material (**I**), and preferably 2% to 6% of the total weight of the composite material (**I**).

17. Process according to one of Claims 1 to 16, **characterized in that** the plastic polymer material is selected from thermoplastic polymers, thermosetting polymers, polymers comprising a thermoplastic part and a thermosetting or heat-crosslinked part, and admixtures thereof.

18. Process according to one of Claims 1 to 17, **characterized in that** the composite material (**I**) comprises a stack of fibrous reinforcing layers, in particular selected from fabrics and unidirectional sheets of reinforcing fibers.

19. Process according to one of Claims 1 to 18, **characterized in that** the reinforcing fibers are glass, carbon, aramid or ceramic fibers, carbon fibers being particularly preferred.

20. A device for preforming a composite material (**I** in the form of a plate, comprising:
- a mold (**20**) having a non-planar bottom (**21**) that defines a forming surface (**22**) for preforming a composite material (**I**),
- a first diaphragm, referred to as the lower diaphragm (**1**), a second diaphragm, referred to as the upper diaphragm (**2**), said two diaphragms (**1** and **2**) being elastically deformable and impermeable to gas (**III**), and being placed one above the other and extending above the bottom of the mold (**21**),
- a positioning device (**9**) making it possible to form with the two diaphragms (**1** and **2**) and the mold (**20**):
- a first sealed chamber (**3**) between the mold (**20**) and the lower diaphragm (**1**), said first chamber (**3**) defining a first variable volume (**V1**), and
- a second sealed chamber (**4**) between the two diaphragms (**1** and **2**), said second chamber (**4**) defining a second variable volume (**V2**), referred to as the inter-diaphragm volume, intended to receive the composite material (**I**) to be preformed,
- the first and second chambers (**3** and **4**) each being equipped with an outlet valve (**30** and **32**), making it possible to provide for the exit of the gaseous medium contained in said chamber, said outlet valves (**30** and **32**) each being connected to a circuit equipped with a gaseous medium flow and pressure regulator, making it possible to evacuate the gaseous medium from the chamber concerned, **characterized in that** the second chamber (**4**) is equipped with an inlet valve (**31**), making it possible to provide for the entry of a gaseous medium into the second chamber (**4**), said inlet valve (**31**) being connected to a circuit equipped with a gaseous medium flow and pressure regulator, making it possible to provide for the introduction of a gaseous medium into the second chamber (**4**).

21. Device according to claim 20, **characterized in that** the first chamber (3) is equipped with an inlet valve (**33**), making it possible to provide for the entry of a gaseous medium into the first chamber (**3**), said inlet valve (**33**) being connected to a circuit equipped with a gaseous medium flow and pressure regulator, making it possible to provide for the introduction of a gaseous medium into the first chamber (**3**).

22. Device according to claim 20 or 21, **characterized in that** it comprises an external circuit (**34**) for the circulation of gas (**III**) from the first chamber (**3**) to the second chamber.
